(19) Europäisches Patentamt
European Patent Office
Office européen des brevets

(11) **EP 2 433 789 A1**

(12) **EUROPEAN PATENT APPLICATION**
published in accordance with Art. 153(4) EPC

(43) Date of publication:
**28.03.2012 Bulletin 2012/13**

(51) Int Cl.:
**B32B 3/30** (2006.01)   **B32B 7/02** (2006.01)
**G02B 5/02** (2006.01)   **G06F 3/041** (2006.01)
**H01H 13/712** (2006.01)

(21) Application number: **10777707.0**

(22) Date of filing: **14.05.2010**

(86) International application number:
**PCT/JP2010/058203**

(87) International publication number:
**WO 2010/134474 (25.11.2010 Gazette 2010/47)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **21.05.2009 JP 2009123506**

(71) Applicant: **Daicel Corporation
Osaka-shi, Osaka 530-0001 (JP)**

(72) Inventors:
• **TAKAHASHI Hiroshi
Hyogo 661-0964 (JP)**

• **HAYASHI Masaki
Himeji-shi
Hyogo 671-1283 (JP)**

(74) Representative: **Grünecker, Kinkeldey,
Stockmair & Schwanhäusser
Anwaltssozietät
Leopoldstrasse 4
80802 München (DE)**

(54) **NEWTON RING-PREVENTING FILM AND TOUCH PANEL**

(57)    An anti-Newton-ring film for effectively preventing generation of Newton rings in a resistive touch panel is provided.

The anti-Newton-ring film is obtained, with the use of a liquid phase containing one or more polymers, one or more curable resin-precursors, and a solvent, through a step for forming a phase-separation structure by spinodal decomposition of (i) a plurality of polymers, (ii) a combination of a polymer and a curable resin-precursor, or (iii) a plurality of curable resin-precursors, from the liquid phase concurrent with evaporation of the solvent, and a step for curing the resin-precursor to form an anti-Newton-ring layer. In the film, the anti-Newton-ring layer has an uneven surface structure, isotropically transmits and scatters an incident light, shows a maximum value of a scattered light intensity at a scattering angle of 0.1 to 10°, and has a total light transmittance of 70 to 100%.

Fig. 2

**Description**

TECHNICAL FIELD

The present invention relates to a film for preventing or inhibiting generation of Newton rings in a resistive touch panel, an electrode substrate for touch panel provided with the film, and a touch panel provided with the electrode substrate.

BACKGROUND ART

A recent progress in an electronic display as man machine interface has resulted in popularization of an interactive input system. Among others, an apparatus in which a touch panel (a digitizer) is united with a display screen is widely used in various fields such as an ATM (automated teller machine), a merchandise management, an outworking (canvassing, selling), a guide sign, and an entertainment device. Since use of the touch panel in combination with a lightweight and thin display (e.g., a liquid crystal display) dispenses with any keyboard and exhibits the features of the display, the touch panel is increasingly used for mobile devices. According to the position detection method, the touch panel can be classified into an optical system, an ultrasonic-wave system, a capacitive system, a resistive system, and other systems. Among them, the resistive system is now rapidly popularized due to a simple structure and an excellent cost performance ratio thereof.

The resistive touch panel is an electric part comprising a pair of films or plates, each having a transparent electrode, held at regular intervals, and the two electrodes faces each other. The operation system is as follows: a first transparent electrode is fixed, and a second transparent electrode is pressed and deflected (or bent) with a finger or a pen (or a stylus) from a viewing side to come in contact with the fixed first transparent electrode and guide an electrical current, so that a detector circuit detects a position and a predetermined input is applied. According to such an operation system, in pressing the electrode with a pen or a finger, a rainbow interference pattern (an interference color or an interference fringe, what is called "Newton rings" (or "Newton's rings")) sometimes appears around a pointing (or touching) member (such as a finger or a pen), and the interference pattern deteriorates a visibility of a screen. Specifically, when the interval between two transparent electrodes facing each other becomes almost the same length as a wavelength of the visible light (about 0.5 $\mu$m) due to contact with each other or deflection for contact, the interference of reflected light is caused due to a space (or gap) between the two transparent electrodes to generate Newton rings. The generation of the Newton rings is an inevitable phenomenon on the basis of the principle of the resistive touch panel.

As a measure to reduce Newton rings in the touch panel, a method of forming an uneven surface structure on a support film which forms a transparent electrode has been reported. Japanese Patent No. 5-54207 (JP-5-54207B, Patent Document 1) discloses an apparatus for avoiding generation of Newton rings, which comprises two spaced-apart light-transmitting parallel layers and an insulator particle having a size of about 3 to 100 $\mu$m interposed between these layers.

Moreover, Japanese Patent Application Laid-Open Nos. 11-250764 (JP-11-250764A, Patent Document 2) and 7-169367 (JP-7-169367A, Patent Document 3) disclose a resistive transparent touch panel which comprises a transparent plastic film or glass substrate having an uneven structure with a predetermined surface roughness formed by embossing or etching a transparent plastic film or glass substrate or incorporating a transparent inorganic fine particle in the film or substrate.

Further, Japanese Patent Application Laid-Open Nos. 8-281856 (JP-8-281856A, Patent Document 4), 9-272183 (JP-9-272183A, Patent Document 5), 10-323931 (JP-10-323931A, Patent Document 6), and 2002-373056 (JP-2002-373056A, Patent Document 7) also disclose a transparent conductive film having an uneven surface structure formed by sandblasting or embossing, or coating a surface of the film with a resin solution containing a filler or a pigment.

However, since these conventional methods use a mechanical process or a filler in order to form an uneven structure, the resulting uneven structure of the film surface has a low uniformity, e.g., has a local difference in level. Moreover, even if the film has a preventive effect against generation of Newton rings, the film cannot effectively improve a visibility of a display apparatus due to an insufficient light-scattering property of the film. Further, the film also has an insufficient strength or stiffness, and repeated (or repetitive) use of a touch panel provided with the film over a long period of time deteriorates the function as a touch panel, performance, and durability.

RELATED ART DOCUMENTS

PATENT DOCUMENTS

Patent Document 1: JP-5-54207B (Claims)
Patent Document 2: JP-11-250764A (Claims and Paragraph Nos. [0040] to [0044])
Patent Document 3: JP-7-169367A (Claims)
Patent Document 4: JP-8-281856A (Claims and Paragraph No.
Patent Document 5: JP-9-272183A (Claims and Paragraph No.
Patent Document 6: JP-10-323931A (Claims)
Patent Document 7: JP-2002-373056A (Claims and Paragraph No. [0009])

SUMMARY OF THE INVENTION

PROBLEMS TO BE SOLVED BY THE INVENTION

It is therefore an object of the present invention to provide an anti-Newton-ring which can effectively inhibit generation of Newton rings in a resistive touch panel, an electrode substrate which comprises the film and is used for a resistive touch panel, and a touch panel provided with the electrode substrate.

Another object of the present invention is to provide an Anti-Newton-ring film which can inhibit generation of Newton rings and provide a dazzle- or glare-subdued (or dazzle- or glare-inhibited), clear or sharp image when the film is attached to a display, an electrode substrate which comprises the film and is used for a resistive touch panel, and a touch panel provided with the electrode substrate.

A further object of the present invention is provide to an anti-Newton-ring film having an excellent durability without deteriorating an anti-Newton-ring effect even in repeated use, an electrode substrate which comprises the film and is used for a resistive touch panel, and a touch panel provided with the electrode substrate.

MEANS TO SOLVE THE PROBLEMS

The inventors of the present invention made extensive studies and finally found that use of an anti-Newton-ring layer comprising one or more polymers, a cured product of one or more curable resin-precursors and having a phase-separation structure for an electrode substrate of a resistive touch panel can effectively inhibit generation of Newton rings in the resistive touch panel. The present invention was accomplished based on the above findings.

That is, the anti-Newton-ring film (or Newton-ring-preventing film) of the present invention contains an anti-Newton-ring layer comprising one or more polymers and a cured product of one or more curable resin-precursors and having a phase-separation structure. The anti-Newton-ring layer has an uneven surface structure, isotropically transmits and scatters an incident light, shows a maximum value of a scattered light intensity at a scattering angle of 0.1 to 10°, and has a total light transmittance of 70 to 100%. The anti-Newton-ring layer may have a total light transmittance of 80 to 100%, a transmitted image clarity of 60 to 100% measured with an image clarity measuring apparatus provided with an optical slit of 0.5 mm width, and a haze of 1 to 20%. The anti-Newton-ring layer may have a structure phase-separated by spinodal decomposition of (i) a plurality of polymers, (ii) a combination of a polymer and a curable resin-precursor, or (will) a plurality of curable resin-precursors, from a liquid phase. The anti-Newton-ring layer may comprise a plurality of polymers being phase-separable each other by spinodal decomposition from a liquid phase, and at least one polymer of the plurality of polymers may have a functional group participating in a curing reaction of the curable resin-precursor, and the curable resin-precursor may be compatible with at least one polymer of the plurality of polymers. The plurality of polymers being phase-separable each other by spinodal decomposition from the liquid phase may comprise a cellulose derivative and at least one resin selected from the group consisting of a styrenic resin, a (meth)acrylic resin, an alicyclic olefinic resin, a polycarbonate-series resin, and a polyester-series resin; and at least one polymer of the polymers may have a polymerizable group. The curable resin-precursor may comprise a polyfunctional monomer having at least two polymerizable unsaturated bonds. The anti-Newton-ring layer may contain the polymer and the curable resin-precursor in a ratio of 5/95 to 60/40 (weight ratio). The anti-Newton-ring film may further comprise a transparent support for supporting the anti-Newton-ring layer.

The present invention also includes an electrode substrate for a resistive touch panel, which comprises the anti-Newton-ring film and a transparent conductive layer (or the electrode substrate comprises the anti-Newton-ring film and a transparent conductive layer formed of the film). In the electrode substrate, the anti-Newton-ring layer may show a maximum value of a scattered light intensity at a scattering angle of 0.5 to 2° and have a haze of 1 to 10%. Moreover, the anti-Newton-ring layer may comprise a cellulose derivative, a (meth)acrylic resin having a polymerizable group, a curable compound having three or more (meth)acryloyl groups, and a fluorine-containing curable compound. The electrode substrate may be an upper electrode substrate contactable with a finger or a touching member, and the transparent support may comprise a transparent plastic film.

Moreover, the present invention also includes a resistive touch panel provided with the electrode substrate. Further, the present invention includes a method for preventing a generation of a Newton ring in a resistive touch panel by using the electrode substrate.

EFFECTS OF THE INVENTION

According to the present invention, the generation of Newton rings in a resistive touch panel can effectively be inhibited due to a gentle uneven structure having a regularity and high uniformity formed on a surface of a film by phase separation. Moreover, the film having such a surface structure not only can inhibit the generation of Newton rings but also allows display of a dazzle-subdued clear image. That is, the film can provide both an anti-Newton-ring property in a resistive touch panel and a visibility in a display screen of a display apparatus. Further, when an electrode substrate of a resistive touch panel comprises the film and the touch panel is repeatedly used, the film has an excellent durability without deterioration of the Newton-ring-preventing effect. For example, even if an electrode substrate comprises the film and a transparent conductive layer formed from a metal oxide (such as ITO), the electrode substrate has an excellent hitting durability (or keystroke durability or keying durability). Thus, cracks or damage of the transparent conductive layer can be inhibited even after repeated (or repetitive) hitting for input.

BRIEF DESCRIPTION OF DRAWINGS

[Fig. 1] Fig. 1 is a schematic view illustrating an apparatus for measuring a transmitted scattering profile (an angle distribution of a transmitted scattered-light) of an anti-Newton-ring film.
[Fig. 2] Fig. 2 is a schematic cross-sectional view showing a touch panel in accordance with an embodiment of the present invention.
[Fig. 3] Fig. 3 is a graph showing a relationship between a scattering angle and a scattered light intensity in each of anti-Newton-ring films obtained in Examples 1 to 4.
[Fig. 4] Fig. 4 is a laser-microscopic photograph of a surface of an anti-Newton-ring film obtained in Example 1.
[Fig. 5] Fig. 5 is a graph showing a wave form at the start of hitting in a durability test for an anti-Newton-ring film obtained in Example 1.
[Fig 6] Fig. 6 is a graph showing a wave form after hitting 500,000 times in a durability test for an anti-Newton-ring film obtained in Example 1.
[Fig. 7] Fig. 7 is a graph showing a wave form after hitting 1,000,000 times in a durability test for an anti-Newton-ring film obtained in Example 1.
[Fig. 8] Fig. 8 is a laser-microscopic photograph of a surface of an anti-Newton-ring film obtained in Example 2.
[Fig. 9] Fig. 9 is a laser-microscopic photograph of a surface of an anti-Newton-ring film obtained in Example 3.
[Fig. 10] Fig. 10 is a graph showing a wave form at the start of hitting in a durability test for an anti-Newton-ring film obtained in Comparative Example 1.
[Fig. 11] Fig. 11 is a graph showing a wave form after hitting 500,000 times in a durability test for an anti-Newton-ring film obtained in Comparative Example 1.
[Fig. 12] Fig. 12 is a graph showing a wave form after hitting 1,000,000 times in a durability test for an anti-Newton-ring film obtained in Comparative Example 1.

DESCRIPTION OF EMBODIMENTS

[Anti-Newton-ring film]

The anti-Newton-ring film (or Newton-ring-preventing film) comprises at least an anti-Newton-ring layer. The anti-Newton-ring layer has a phase-separation structure formed by spinodal decomposition from a liquid phase (wet spinodal decomposition). That is, by using a resin composition which contains a polymer, a curable resin-precursor and a solvent, during a step of evaporating or removing the solvent from a liquid phase (or a uniform solution or a coat layer thereof) in the resin composition with drying or other means, a phase separation by spinodal decomposition can be generated depending on condensation of the liquid phase, and a phase-separated structure in which the distance between phases is relatively regular can be formed. More specifically, the above-mentioned wet spinodal decomposition can usually be carried out by coating a support with a liquid mixture or resin composition (uniform solution) containing one or more polymers, one or more curable resin-precursors and a solvent, and evaporating the solvent from the resulting coat layer. When a separable (or releasable) support is used as the support, an anti-Newton-ring film comprising the anti-Newton-ring layer alone can be obtained by separating the cured coat layer from the support. When a non-separable (or non-releasable) support (preferably a transparent support) is used as the support, an anti-Newton-ring film having a lamination structure composed of the support and the anti-Newton-ring layer can be obtained.

(Polymer component)

As a polymer component, a thermoplastic resin is usually employed. As the thermoplastic resin, there may be exemplified a styrenic resin, a (meth)acrylic resin, an organic acid vinyl ester-series resin, a vinyl ether-series resin, a halogen-containing resin, an olefinic resin (including an alicyclic olefinic resin), a polycarbonate-series resin, a polyester-series resin, a polyamide-series resin, a thermoplastic polyurethane resin, a polysulfone-series resin (e.g., a polyether sulfone and a polysulfone), a polyphenylene ether-series resin (e.g., a polymer of 2,6-xylenol), a cellulose derivative (e.g., a cellulose ester, a cellulose carbamate, and a cellulose ether), a silicone resin (e.g., a polydimethylsiloxane and a polymethylphenylsiloxane), a rubber or elastomer (e.g., a diene-series rubber such as a polybutadiene or a polyisoprene, a styrene-butadiene copolymer, an acrylonitrile-butadiene copolymer, an acrylic rubber, a urethane rubber, and a silicone rubber), and the like. These thermoplastic resins may be used alone or in combination.

The styrenic resin may include a homo- or copolymer of a styrenic monomer (e.g. a polystyrene, a styrene-$\alpha$-methylstyrene copolymer, and a styrene-vinyl toluene copolymer), and a copolymer of a styrenic monomer and other polymerizable monomer [e.g., a (meth)acrylic monomer, maleic anhydride, a maleimide-series monomer, and a diene]. The styrenic copolymer may include, for example, a styrene-acrylonitrile copolymer (AS resin), a copolymer of styrene and a (meth)acrylic monomer [e.g., a styrene-methyl methacrylate copolymer, a styrene-methyl methacrylate-(meth) acrylate copolymer, and a styrene-methyl methacrylate- (meth)acrylic acid copolymer], and a styrene-maleic anhydride copolymer. The preferred styrenic resin includes a polystyrene, a copolymer of styrene and a (meth)acrylic monomer [e.g., a copolymer comprising styrene and methyl methacrylate as main units, such as a styrene-methyl methacrylate copolymer], an AS resin, a styrene-butadiene copolymer, and the like.

As the (meth)acrylic resin, a homo- or copolymer of a (meth) acrylic monomer and a copolymer of a (meth) acrylic monomer and a copolymerizable monomer may be employed. As the (meth)acrylic monomer, there may be mentioned, for example, (meth)acrylic acid; a $C_{1-10}$alkyl (meth)acrylate such as methyl(meth)acrylate, ethyl(meth)acrylate, butyl (meth)acrylate, t-butyl (meth)acrylate, isobutyl (meth)acrylate, hexyl (meth)acrylate, octyl (meth)acrylate or 2-ethylhexyl (meth)acrylate; a cycloalkyl (meth)acrylate such as cyclohexyl (meth)acrylate; an aryl (meth)acrylate such as phenyl (meth)acrylate; a hydroxyalkyl (meth)acrylate such as hydroxyethyl (meth)acrylate or hydroxypropyl (meth) acrylate; glycidyl (meth)acrylate; an N,N-dialkylaminoalkyl (meth)acrylate; (meth)acrylonitrile; and a (meth)acrylate having a crosslinked cyclic hydrocarbon group (e.g., isobornyl (meth)acrylate, tricyclodecyl (meth)acrylate, and adamantyl (meth)acrylate). The copolymerizable monomer may include the above styrenic monomer, a vinyl ester-series monomer, maleic anhydride, maleic acid, and fumaric acid. These monomers may be used alone or in combination.

As the (meth) acrylic resin, there may be mentioned, for example, a poly(meth)acrylate such as a poly(methyl methacrylate), a methyl methacrylate-(meth)acrylic acid copolymer, a methyl methacrylate-(meth)acrylate copolymer, a methyl methacrylate-acrylate-(meth)acrylic acid copolymer, a (meth)acrylate-styrene copolymer (e.g., a MS resin), and a (meth)acrylic acid-methyl (meth)acrylate-isobornyl (meth)acrylate. The preferred (meth)acrylic resin includes a poly($C_{1-6}$alkyl (meth)acrylate) such as a poly(methyl (meth)acrylate), particularly a methyl methacrylate-series resin containing methyl methacrylate as a main component (about 50 to 100% by weight, and preferably about 70 to 100% by weight). Further, the (meth)acrylic resin may be a silicone-containing (meth)acrylic resin.

As the organic acid vinyl ester-series resin, there may be mentioned a homo- or copolymer of a vinyl ester-series monomer (e.g., a poly(vinyl acetate) and a poly(vinyl propionate)), a copolymer of a vinyl ester-series monomer and a copolymerizable monomer (e.g., an ethylene-vinyl acetate copolymer, a vinyl acetate-vinyl chloride copolymer, and a vinyl acetate-(meth)acrylate copolymer), or a derivative thereof. The derivative of the vinyl ester-series resin may include a poly(vinyl alcohol), an ethylene-vinyl alcohol copolymer, a poly(vinyl acetal) resin, and the like.

As the vinyl ether-series resin, a homo- or copolymer of a vinyl $C_{1-10}$alkyl ether such as vinyl methyl ether, vinyl ethyl ether, vinyl propyl ether or vinyl t-butyl ether, and a copolymer of a vinyl $C_{1-10}$alkyl ether and a copolymerizable monomer (e.g., a vinyl alkyl ether-maleic anhydride copolymer).

The halogen-containing resin may include a poly(vinyl chloride), a poly(vinylidene fluoride), a vinyl chloride-vinyl acetate copolymer, a vinyl chloride-(meth)acrylate copolymer, a vinylidene chloride-(meth)acrylate copolymer, and the like.

The olefinic resin may include, for example, an olefinic homopolymer such as a polyethylene or a polypropylene, and a copolymer such as an ethylene-vinyl acetate copolymer, an ethylene-vinyl alcohol copolymer, an ethylene-(meth) acrylic acid copolymer or an ethylene-(meth)acrylate copolymer. As the alicyclic olefinic resin, there may be mentioned a homo- or copolymer of a cyclic olefin such as norbornene or dicyclopentadiene (e.g., a polymer having an alicyclic hydrocarbon group such as tricyclodecane which is sterically rigid), a copolymer of the cyclic olefin and a copolymerizable monomer (e.g., an ethylene-norbornene copolymer and a propylene-norbornene copolymer). The alicyclic olefinic resin is available as, for example, the trade name "TOPAS", the trade name "ARTON", the trade name "ZEONEX" and the like.

The polycarbonate-series resin may include an aromatic polycarbonate based on a bisphenol (e.g., bisphenol A), an aliphatic polycarbonate such as diethylene glycol bisallyl carbonate, and others.

The polyester-series resin may include an aromatic polyester obtainable from an aromatic dicarboxylic acid such as terephthalic acid [for example, a homopolyester, e.g., a poly($C_{2-4}$alkylene terephthalate) such as a poly(ethylene terephthalate) or a poly(butylene terephtalate) a poly($C_{2-4}$alkylene naphthalate), and a copolyester comprising a $C_{2-4}$alkylene arylate unit (a $C_{2-4}$alkylene terephthalate unit and/or a $C_{2-4}$alkylene naphthalate unit) as a main component (e.g., not less than 50% by weight)]. The copolyester may include a copolyester in which, in constituting units of a poly ($C_{2-4}$alkylene arylate), part of $C_{2-4}$alkylene glycols is substituted with a polyoxy$C_{2-4}$alkylene glycol, a $C_{5-10}$alkylene glycol, an alicyclic diol (e.g., cyclohexane dimethanol and hydrogenated bisphenol A), a diol having an aromatic ring (e.g., 9,9-bis(4-(2-hydroxyethoxy)phenyl)fluorene, a bisphenol A, and a bisphenol A-alkylene oxide adduct) or the like, and a copolyester in which, in constituting units, part of aromatic dicarboxylic acids is substituted with an unsymmetric aromatic dicarboxylic acid such as phthalic acid or isophthalic acid, an aliphatic $C_{6-12}$dicarboxylic acid such as adipic acid, or the like. The polyester-series resin may also include a polyarylate-series resin, an aliphatic polyester obtainable from an aliphatic dicarboxylic acid such as adipic acid, and a homo- or copolymer of a lactone such as ε-caprolactone. The preferred polyester-series resin is usually a non-crystalline resin, such as a non-crystalline copolyester (e.g., a $C_{2-4}$alkylene arylate-series copolyester).

The polyamide-series resin may include an aliphatic polyamide such as a polyamide 46, a polyamide 6, a polyamide 66, a polyamide 610, a polyamide 612, a polyamide 11 or a polyamide 12, and a polyamide obtainable from a dicarboxylic acid (e.g., terephthalic acid, isophthalic acid, and adipic acid) and a diamine (e.g., hexamethylenediamine and metaxylylenediamine). The polyamide-series resin may be a homo- or copolymer of a lactam such as ε-caprolactam and is not limited to a homopolyamide but may be a copolyamide.

Among the cellulose derivatives, the cellulose ester may include, for example, an aliphatic organic acid ester of a cellulose (e.g., a $C_{1-6}$oraganic acid ester of a cellulose such as a cellulose acetate (e.g., a cellulose diacetate and a cellulose triacetate), a cellulose propionate, a cellulose butyrate, a cellulose acetate propionate, or a cellulose acetate butyrate), an aromatic organic acid ester of a cellulose (e.g. a $C_{7-12}$aromatic carboxylic acid ester of a cellulose such as a cellulose phthalate or a cellulose benzoate), an inorganic acid ester of a cellulose (e.g., a cellulose phosphate and a cellulose sulfate) and may be a mixed acid ester of a cellulose such as a cellulose acetate nitrate. The cellulose derivative may also include a cellulose carbamate (e.g. a cellulose phenylcarbamate), a cellulose ether (e.g., a cyanoethylcellulose; a hydroxy$C_{2-4}$alkyl cellulose such as a hydroxyethyl cellulose or a hydroxypropyl cellulose; a $C_{1-6}$alkyl cellulose such as a methyl cellulose or an ethyl cellulose; a carboxymethyl cellulose or a salt thereof, a benzyl cellulose, and an acetyl alkyl cellulose).

The preferred thermoplastic resin includes, for example, a styrenic resin, a (meth)acrylic resin, a vinyl acetate-series resin, a vinyl ether-series resin, a halogen-containing resin, an alicyclic olefinic resin, a polycarbonate-series resin, a polyester-series resin, a polyamide-series resin, a cellulose derivative, a silicone-series resin, and a rubber or elastomer, and the like. As the resin, there is usually employed a resin that is non-crystalline and is soluble in an organic solvent (particularly a common solvent for dissolving a plurality of polymers or curable compounds). In particular, a resin that is excellent in moldability or film-forming (film-formable) properties, transparency, and weather resistance [for example, a styrenic resin, a (meth)acrylic resin, an alicyclic olefinic resin, a polyester-series resin, and a cellulose derivative (e.g., a cellulose ester)] is preferred.

As the polymer component, there may be also used a polymer having a functional group participating (or being involved) in a curing reaction (or a functional group capable of reacting with the curable compound). The polymer may have the functional group in a main chain thereof or in a side chain thereof. The functional group may be introduced into a main chain of the polymer with co-polymerization, co-condensation or the like and is usually introduced into a side chain of the polymer. Such a functional group may include a condensable group or a reactive group (for example, a hydroxyl group, an acid anhydride group, a carboxyl group, an amino or an imino group, an epoxy group, a glycidyl group, and an isocyanate group), a polymerizable group [ for example, a $C_{2-6}$alkenyl group such as vinyl, propenyl, isopropenyl, butenyl or allyl, a $C_{2-6}$alkynyl group such as ethynyl, propynyl or butynyl, a $C_{2-6}$alkenylidene group such as vinylidene, or a group having the polymerizable group(s) (e.g., (meth)acryloyl group)], and others. Among these functional groups, the polymerizable group is preferred.

As a process for introducing the polymerizable group in a side chain of the polymer component, for example, there may be utilized a process of allowing a thermoplastic resin having a functional group (such as a reactive group or condensable group) to react with a polymerizable compound having a group reactive to the functional group.

Exemplified as the thermoplastic resin having a functional group is a thermoplastic resin having a carboxyl group or an acid anhydride group thereof (e.g., a (meth)acrylic resin, a polyester-series resin, and a polyamide-series resin), a thermoplastic resin having a hydroxyl group (e.g., a (meth)acrylic resin, a polyurethane-series resin, a cellulose derivative, and a polyamide-series resin), a thermoplastic resin having an amino group (e.g., a polyamide-series resin), a thermoplastic resin having an epoxy group (e.g., a (meth)acrylic resin or polyester-series resin having an epoxy group), and others. Moreover, such a resin may also be a resin in which the functional group is introduced into a thermoplastic resin (such as a styrenic resin, an olefinic resin, and an alicyclic olefinic resin) with co-polymerization or graft polymerization.

As the polymerizable compound, for a thermoplastic resin having a carboxyl group or an acid anhydride group thereof, there may be used a polymerizable compound having an epoxy group, a hydroxyl group, an amino group, an isocyanate group or the like. For a thermoplastic resin having a hydroxyl group, there may be mentioned a polymerizable compound having a carboxyl group or an acid anhydride group thereof, an isocyanate group or the like. For a thermoplastic resin having an amino group, there may be mentioned a polymerizable compound having a carboxyl group or an acid anhydride group thereof, an epoxy group, an isocyanate group or the like. For thermoplastic resin having an epoxy group, there may be mentioned a polymerizable compound having a carboxyl group or an acid anhydride group thereof, an amino group or the like.

Among the above-mentioned polymerizable compounds, as the polymerizable compound having an epoxy group, for example, there may be mentioned an epoxycyclo$C_{5-8}$alkenyl (meth)acrylate such as epoxycyclohexenyl (meth) acrylate, glycidyl (meth)acrylate, and allyl glycidyl ether. As the compound having a hydroxyl group, for example, there may be mentioned a hydroxy$C_{1-4}$alkyl (meth)acrylate such as hydroxypropyl (meth)acrylate, and a $C_{2-6}$alkylene glycol (meth)acrylate such as ethylene glycol mono (meth) acrylate. As the polymerizable compound having an amino group, for example, there may be mentioned an amino$C_{1-4}$alkyl (meth)acrylate such as aminoethyl (meth)acrylate, a $C_{3-6}$alkenylamine such as allylamine, and an aminostyrene such as 4-aminostyrene or diaminostyrene. As the polymerizable compound having an isocyanate group, for example, there may be mentioned a polyurethane (meth)acrylate and vinyl isocyanate. As the polymerizable compound having a carboxyl group or an acid anhydride group thereof, for example, there may be mentioned an unsaturated carboxylic acid or anhydride thereof such as a (meth)acrylic acid or maleic anhydride.

As typical examples, the following combinations are included: a thermoplastic resin having a carboxyl group or an acid anhydride group thereof, and an epoxy group-containing compound; particularly a (meth)acrylic resin [e.g., a (meth)acrylic acid-(meth)acrylic ester copolymer] and an epoxy group-containing (meth)acrylate [e.g., an epoxycycloalkenyl(meth)acrylate, and a glycidyl (meth)acrylate]. Concretely, there may be used a polymer in which a polymerizable unsaturated group(s) is(are) incorporated in one or some of carboxyl groups of a (meth)acrylic resin, for example, a (meth)acrylic polymer having in a side chain thereof a photo-polymerizable unsaturated group(s) introduced by allowing epoxy group(s) of 3,4-epoxycyclohexenyl methyl acrylate to react with one or some of carboxyl groups of a (meth)acrylic acid-(meth)acrylate copolymer (CYCLOMER-P, manufactured by Daicel Chemical Industries, Ltd.).

The introduction amount of the functional group (particularly the polymerizable group) that participates in (or being involved in) a curing reaction of the thermoplastic resin is about 0.001 to 10 mol, preferably about 0.01 to 5 mol, and more preferably about 0.02 to 3 mol relative to 1 kg of the thermoplastic resin.

The polymer (s) may be used in a suitable combination. That is, the polymer may comprise a plurality of polymers. The plurality of polymers may be capable of phase separation by spinodal decomposition from a liquid phase. Moreover, the plurality of polymers may be incompatible with each other. For a combination of a plurality of polymers, the combination of a first resin with a second resin is not particularly limited to a specific one, and a plurality of polymers incompatible with each other in the neighborhood of a processing temperature, for example two polymers incompatible with each other, may be used in a suitable combination. For example, when the first resin is a styrenic resin (e.g., a polystyrene, a styrene-acrylonitrile copolymer), the second resin may be a cellulose derivative (e.g., a cellulose ester such as a cellulose acetate propionate), a (meth)acrylic resin (e.g., a poly(methyl methacrylate)), an alicyclic olefinic resin (e.g., a polymer comprising a norbornene unit as a monomer unit), a polycarbonate-series resin, apolyester-seriesresin(e.g., the above-mentioned poly($C_{2-4}$alkylene arylate)-series copolyester), and others. Moreover, for example, when a first polymer is a cellulose derivative (e.g., a cellulose ester such as cellulose acetate propionate), a second polymer may be a styrenic resin (e.g., a polystyrene, a styrene-acrylonitrile copolymer), a (meth)acrylic resin, an alicyclic olefinic resin (e.g., a polymer comprising a norbornene unit as a monomer unit), a polycarbonate- series resin, a polyester-series resin (e.g., the above-mentioned poly($C_{2-4}$alkylene arylate)-series copolyester), and others. In the combination of a plurality of resins, there may be used at least a cellulose ester (for example, $C_{2-4}$alkylcarboxylic acid ester of a cellulose such as a cellulose diacetate, a cellulose triacetate, a cellulose acetate propionate, or a cellulose acetate butyrate).

Incidentally, the phase-separation structure generated by spinodal decomposition is finally cured with an actinic ray (e.g., an ultraviolet ray, an electron beam), heat, or other means to form a cured resin. Accordingly, the anti-Newton-ring layer comprising the cured resin can reduce a damage to a transparent support in formation of a transparent conductive layer (such as an ITO) with sputtering or other means. In particular, a transparent support comprising a plastic (such as a poly(ethylene terephthalate)) can not only reduce the damage but also inhibit precipitation of a low molecular weight component (such as an oligomer) from the inside of the transparent support due to heat. Further, the cured resin can impart abrasion resistance to the anti-Newton-ring layer, inhibit the damage of the surface structure of the touch panel even in repeated use, and improve the durability of the touch panel.

From the viewpoint of abrasion resistance after curing, at least one of the plurality of polymers, e.g., one of polymers incompatible with each other (in the case of using a first resin with a second resin in combination, particularly both polymers) is preferably a polymer having a functional group that is reactive to the curable resin-precursor, in a side chain thereof.

The ratio (weight ratio) of the first polymer relative to the second polymer [the former/the latter] may be selected within the range of, for example, about 1/99 to 99/1, preferably about 5/95 to 95/5 and more preferably about 10/90 to 90/10, and is usually about 20/80 to 80/20, particularly about 30/70 to 70/30.

Incidentally, the polymer for forming a phase-separation structure may comprise the thermoplastic resin or other polymers in addition to the above-mentioned two polymers incompatible with each other.

The glass transition temperature of the polymer may be selected within the range of, for example, about -100°C to 250°C, preferably about -50°C to 230°C, and more preferably about 0°C to 200°C (for example, about 50°C to 180°C). It is advantageous from the viewpoint of surface hardness that the glass transition temperature is not lower than 50°C (e.g., about 70°C to 200°C) and preferably not lower than 100°C (e.g., about 100°C to 170°C). Incidentally, the glass transition temperature can be measured by a differential scanning calorimeter. For example, the glass transition temperature can be measured by a differential scanning calorimeter ("DSC6200", manufactured by Seiko Instruments & Electronics Ltd.) under a nitrogen flow at a heating rate of 10°C/minute. The weight-average molecular weight of the polymer may be selected within the range of, for example, not more than 1,000,000, and preferably about 1,000 to 500,000.

(Curable resin-precursor)

As the curable resin-precursor, there may be used various curable compounds having a reactive functional group to heat or an actinic ray (e.g., an ultraviolet ray, and an electron beam) and being capable of forming a resin (particularly a cured or a crosslinked resin) by curing or crosslinking with heat or an actinic ray. For example, as the resin-precursor, there may be mentioned a thermosetting compound or resin [a low molecular weight compound having an epoxy group, a polymerizable group, an isocyanate group, an alkoxysilyl group, a silanol group, or others (e.g., an epoxy-series resin, an unsaturated polyester-series resin, a urethane-series resin, and a silicone-series resin)], and a photo-curable compound that is curable with an actinic ray (such as ultraviolet ray) (e.g., an ultraviolet-curable compound such as a photo-curable monomer or oligomer). The photo-curable compound may be an EB (electron beam)-curable compound, or others. Incidentally, a photo-curable compound such as a photo-curable monomer, a photo-curable oligomer, or a photo-curable resin which may have a low molecular weight is sometimes simply referred to as "photo-curable resin".

The photo-curable compound may include, for example, a monomer and an oligomer (or a resin, particularly a resin having a low molecular weight). For example, the monomer can be classified into the following two groups: a monofunctional monomer, which has one polymerizable group, and a polyfunctional monomer, which has at least two polymerizable groups.

The monofunctional monomer may include, for example, a (meth)acrylic monomer (e.g., a (meth)acrylate), a vinyl-series monomer (e.g., vinylpyrrolidone), and a (meth)acrylate having a crosslinked cyclic hydrocarbon group (e.g., isobornyl (meth)acrylate and adamantyl (meth)acrylate).

The polyfunctional monomer may include a polyfunctional monomer having about 2 to 8 polymerizable groups. The difunctional monomer may include, for example, an alkylene glycol di(meth)acrylate such as ethylene glycol di(meth)acrylate, propylene glycol di(meth)acrylate, butanediol di(meth)acrylate, neopentyl glycol di(meth)acrylate, or hexanediol di(meth)acrylate; a (poly)oxyalkylene glycol di(meth)acrylate such as diethylene glycol di(meth)acrylate, dipropylene glycol di(meth)acrylate, or a polyoxytetramethylene glycol di(meth)acrylate; and a di(meth)acrylate having a crosslinked cyclic hydrocarbon group (e.g., tricyclodecane dimethanol di(meth)acrylate and adamantane di(meth)acrylate).

As the tri- to octa-functional monomer, there may be mentioned, for example, glycerin tri(meth)acrylate, trimethylolpropane tri(meth)acrylate, trimethylolethane tri(meth)acrylate, pentaerythritol tri(meth)acrylate, pentaerythritol tetra(meth)acrylate, dipentaerythritol penta(meth)acrylate, and dipentaerythritol hexa(meth)acrylate.

Examples of the oligomer or resin may include a (meth)acrylate of an adduct of bisphenol A with an alkylene oxide, an epoxy (meth)acrylate (e.g., a bisphenol A-based epoxy (meth)acrylate and a novolak-based epoxy (meth)acrylate), a polyester (meth)acrylate (e.g., an aliphatic polyester-based (meth)acrylate and an aromatic polyester-based (meth)acrylate), a (poly)urethane (meth)acrylate (e.g., a polyester-based urethane (meth)acrylate and a polyether-based urethane (meth)acrylate), a silicone (meth)acrylate, and others. These (meth)acrylate oligomers or resins may contain a copolymerizable monomer unit as exemplified in the paragraph of the (meth)acrylic resin in the polymer component. These photo-curable compounds may be used alone or in combination.

Further, the curable resin-precursor may contain a fluorine atom or an inorganic particle in order to improve the strength of the anti-Newton-ring layer or other purposes. The precursor containing a fluorine atom (fluorine-containing curable compound) may include fluorides of the above-mentioned monomer and oligomer, for example, a fluoroalkyl (meth)acrylate [e.g., perfluorooctylethyl (meth)acrylate and trifluoroethyl (meth)acrylate], a fluoro(poly)oxyalkylene glycol di(meth)acrylate [e.g., fluoroethylene glycol di(meth)acrylate and fluoropropylene glycol di(meth)acrylate], and a fluorine-containing epoxy resin, a fluorine-containing urethane-series resin. The precursor containing an inorganic particle may include, for example, an inorganic particle having a polymerizable group on a surface thereof (e.g., a silica particle which has a surface modified with a silane coupling agent having a polymerizable group). As a nano-sized silica particle (or silica nanoparticle) having a polymerizable group on a surface thereof, for example, a polyfunctional hybrid UV-curing agent (Z7501) is commercially available from JSR Corporation.

The preferred curable resin-precursor includes a photo-curable compound curable in a short time, for example, an ultraviolet-curable compound (e.g., a monomer, an oligomer, and a resin which may have a low molecular weight) and an EB-curable compound. In particular, a resin-precursor having a practical advantage is an ultraviolet-curable resin. Further, in order to improve the durability in repeated use, the photo-curable resin preferably comprises a photo-curable compound having two or more functional groups (preferably about 2 to 10 functional groups, and more preferably about 3 to 8 functional groups), particularly, a polyfunctional (meth)acrylate [for example, a tri- or more-functional (particularly, tetra- to octa-functional) (meth)acrylate].

Furthermore, according to the present invention, the curable resin-precursor comprises a penta- to hepta-functional (meth)acrylate and a tri- to tetra-functional (meth) acrylate in combination. The ratio (weight ratio) of the former relative to the latter is about 100/0 to 30/70, preferably about 99/1 to 50/50, and more preferably about 90/10 to 60/40.

Moreover, the curable resin-precursor preferably contains the above-mentioned fluorine-containing curable compound (particularly a monomer having a fluorine atom and a (meth)acryloyl group, such as a (meth)acrylate having a fluoroalkyl chain) in addition to a polyfunctional (meth)acrylate in order to lower a surface tension of a coat layer, form a smoothly (or gently) uneven structure on the surface of the coat layer, reduce the haze value, and improve the strength of the layer. The ratio of the fluorine-containing curable compound is, for example, about 0.01 to 5 parts by weight, preferably about 0.05 to 1 parts by weight, and more preferably about 0.1 to 0.5 parts by weight relative to 100 parts by weight of the polyfunctional (meth)acrylate.

The number-average molecular weight of the curable resin-precursor is, allowing for compatibility to the polymer, not more than about 5000, preferably not more than about 2000, and more preferably not more than about 1000. The number-average molecular weight can be measured by a membrane osmometry.

The curable resin-precursor may contain a curing agent depending on the variety. For example, a thermosetting resin may contain a curing agent such as an amine or a polyfunctional carboxylic acid, and a photo-curable resin may contain a photopolymerization initiator. As the photopolymerization initiator, there may be exemplified a conventional component, e.g., an acetophenone, a propiophenone, a benzyl, a benzoin, a benzophenone, a thioxanthone, an acylphosphine oxide, and others. The amount of the curing agent (such as a photo curing agent) relative to 100 parts by weight of the curable resin-precursor is about 0.1 to 20 parts by weight, preferably about 0.5 to 10 parts by weight, and more preferably about 1 to 8 parts by weight (particularly about 1 to 5 parts by weight), and may be about 3 to 8 parts by weight.

Further, the curable resin-precursor may contain a curing accelerator. For example, the photo-curable resin may contain a photo-curing accelerator, e.g., a tertiary amine (such as a dialkylaminobenzoic ester) and a phosphine-series photopolymerization accelerator.

Among at least one polymer and at least one curable resin-precursor, at least two components are used in such a combination as they are phase-separated with each other in the neighborhood of a processing temperature. As such a combination, for example, there may be mentioned (a) a combination in which a plurality of polymers are incompatible with each other and form a phase separation, (b) a combination in which a polymer and a curable resin-precursor are incompatible with each other and form a phase separation, (c) a combination in which a plurality of curable resin-precursors are incompatible with each other and form a phase separation, and other combinations. Among these combinations, (a) the combination of the plurality of polymers or (b) the combination of the polymer with the curable resin-precursor is usually employed, and (a) the combination of the plurality of polymers is particularly preferred. When both components to be phase-separated have high compatibility, both components fail to generate effective phase separation during a drying step for evaporating the solvent, and as a result the layer obtained therefrom deteriorates functions as an anti-Newton-ring layer.

Incidentally, the thermoplastic resin and the curable resin-precursor (or cured resin) may be compatible or incompatible with each other. When the polymer and the curable resin-precursor are incompatible with each other and are phase-separated, a plurality of polymers may be used as the polymer. When a plurality of polymer is used, at least one polymer needs only to be incompatible with the resin-precursor (or cured resin), and other polymer(s) may be compatible with the resin-precursor.

Moreover, the above-mentioned combination may be a combination of two thermoplastic resins incompatible with each other with a curable compound (in particular a monomer or oligomer having a plurality of curable functional groups). Further, from the viewpoint of abrasion resistance after curing, one polymer of the above-mentioned incompatible thermoplastic resins (particularly both polymers) may be a thermoplastic resin having a functional group participating or reacting in a curing reaction (a functional group participating or reacting in curing of the curable resin-precursor).

When the polymer comprises a plurality of polymers incompatible with each other to form phase separation, the curable resin-precursor is used in combination with at least one polymer among a plurality of polymers incompatible with each other so that the precursor and the polymer can be compatible with each other in the neighborhood of a processing temperature. That is, when a plurality of polymers incompatible with each other comprise, for example, a first resin and a second resin, the curable resin-precursor needs only to be compatible with at least one of the first resin and the second resin, or may be preferably compatible with both resin components. When the curable resin-precursor is compatible with both resin components, at least two phases which are phase-separated are obtained, one phase comprises a mixture containing the first resin and the curable resin-precursor as main components, the other phase comprises a mixture containing the second resin and the curable resin-precursor as main components.

Specifically, when the plurality of polymers comprises a cellulose derivative and a (meth) acrylic resin having a polymerizable group in combination and the curable resin-precursor comprises a polyfunctional (meth) acrylate, these polymers may be incompatible with each other and form a phase separation, the (meth)acrylic resin having a polymerizable group and the polyfunctional (meth)acrylate may also be incompatible with each other and form a phase separation, and the cellulose derivative and the polyfunctional (meth)acrylate may be compatible with each other.

When the plurality of polymers and the curable resin-precursor to be selected have high compatibility with each other, the polymers or the polymer and the precursor fail to generate effective phase separation among themselves during a drying step for evaporating the solvent, and as a result the layer obtained therefrom deteriorates functions as an anti-Newton-ring layer. The phase separability among the polymers or the precursor can be judged conveniently by visually conforming whether the residual solid content becomes clouded or not during a step of preparing a uniform solution with a good solvent to both components and gradually evaporating the solvent.

Further, the difference in the refraction index between the polymer and the cured or crosslinked resin, or the difference in the refraction index between the plurality of polymers (the first resin and the second resin) may, for example, be about 0.001 to 0.2, and preferably about 0.05 to 0.15. The refraction index can be measured by a prism coupler (manufactured by Metricon Corporation) at a wavelength of 633 nm.

In the spinodal decomposition, with the progress of the phase separation, the bicontinuous phase structure is formed. On further proceeding the phase separation, the continuous phase becomes discontinuous owing to its own surface tension to change into the droplet phase structure (e.g., an islands-in-the-sea structure containing independent phases such as ball-like shape, spherical shape, discotic shape or oval-sphere shape). Therefore, an intermediate structure of the bicontinuous phase structure and the drop phase structure (i.e., a phase structure in a transitional state from the bicontinuous phase to the droplet phase) can also be formed by varying the degree of phase separation. The phase-separation structure in the anti-Newton-ring layer of the present invention may be an islands-in-the-sea structure (a droplet phase structure, or a phase structure in which one phase is independent or isolated) or a bicontinuous phase structure (or a mesh structure), or may be an intermediate structure being a coexistent state of a bicontinuous phase structure and a droplet phase structure. The phase-separation structure allows a finely uneven structure to be formed on the surface of thus obtained anti-Newton-ring layer after drying of the solvent.

In the phase-separation structure, it is advantageous from the viewpoint of forming the uneven surface structure and of enhancing the surface hardness that the structure forms a droplet phase structure having at least an island domain. Incidentally, when the phase-separation structure comprising a polymer and the above-mentioned precursor (or cured resin) forms an islands-in-the-sea structure, the polymer component may form a sea phase. It is however advantageous from the viewpoint of surface hardness that the polymer component forms island domains. The formation of the island domains can provide a finely uneven structure on the surface of thus obtained anti-Newton-ring layer after drying. According to the present invention, the uneven surface structure formed by the phase-separated resin components has gentle roughness and can inhibit falling off of the raised portion, compared with an uneven surface structure formed by incorporating a hard fine particle or the like into the resin components. Therefore, the present invention achieves an excellent hitting durability and can inhibit cracks or damage of the transparent conductive layer formed from a metal oxide (such as an ITO) even after repeated hitting (for example, after hitting not less than hundreds of thousands of times).

Further, the average distance between domains of the above-mentioned phase-separation structure may be irregular. The average distance usually has a substantial regularity or periodicity. For example, the average distance between domains (or phases) may be about 1 to 70 $\mu$m (e.g., about 1 to 40 $\mu$m), preferably about 2 to 50 $\mu$m (e.g., about 3 to 30 $\mu$m), and more preferably about 5 to 20 $\mu$m (e.g. about 10 to 20 $\mu$m). The average distance between domains can be measured by observing a transmission electron micrograph.

The ratio (weight ratio) of the polymer relative to the curable resin-precursor is not particularly limited to a specific one and, for example, the polymer/the curable resin-precursor may be selected within the range of about 5/95 to 95/5. From the viewpoint of surface hardness, the ratio (weight ratio) is preferably about 5/95 to 60/40, more preferably about 10/90 to 50/50, and particularly about 10/90 to 40/60.

The anti-Newton-ring layer may have a thickness of about 0.3 to 20 $\mu$m, preferably about 1 to 15 $\mu$m (for example, about 1 to 10 $\mu$m), and is usually about 2 to 10 $\mu$m (particularly about 3 to 7 $\mu$m). When the anti-Newton-ring film comprises the anti-Newton-ring layer alone, the thickness of the anti-Newton-ring layer may for example be selected from about 1 to 100 $\mu$m (preferably about 3 to 50 $\mu$m).

As described above, the anti-Newton-ring film may comprise the anti-Newton-ring layer alone, or a support and the anti-Newton-ring layer formed thereon. As the support, there may be used a support having light transmittance properties, for example, a transparent support such as a synthetic resin film. Moreover, the support having light transmittance properties may comprise a transparent polymer film for forming an optical member.

(Transparent support)

As the transparent support (or substrate sheet), there may be exemplified a resin sheet in addition to glass and ceramics. As a resin constituting the transparent support, the resin similar to that of the above-mentioned anti-Newton-ring layer may be used. The preferred transparent support includes a transparent polymer film, for example, a film formed with a cellulose derivative [e.g., a cellulose acetate such as a cellulose triacetate (TAC) or a cellulose diacetate], a polyester-series resin [e.g., a poly(ethylene terephthalate) (PET), a poly(butylene terephthalate) (PBT), and a polyarylate-series resin], a polysulfone-series resin [e.g., a polysulfone, and a polyether sulfone], a polyether ketone-series resin [e.g., a polyether ketone and a polyether ether ketone], a polycarbonate-series resin (e.g., a bisphenol A-based polycarbonate), a polyolefinic resin (e.g., a polyethylene, and a polypropylene), a cyclic polyolefinic resin (e.g., TOPAS, ARTON, and ZEONEX) a halogen-containing resin (e.g., a poly(vinylidene chloride)), a (meth)acrylic resin, a styrenic resin (e.g., a polystyrene), a vinyl acetate- or vinyl alcohol-series resin (e.g., a poly(vinyl alcohol)) and others. The transparent support may be stretched monoaxially or biaxially.

The optically isotropic transparent support may include glass, a non-stretched or stretched plastic sheet or film, and for example, may include a sheet or film formed from a polyester-series resin (e.g., a PET, and a PBT), a cellulose ester [e.g., a cellulose acetate (such as a cellulose diacetate or a cellulose triacetate) and an ester of a cellulose with acetic acid and a $C_{3-4}$ organic acid (such as a cellulose acetate propionate or a cellulose acetate butyrate)], particularly a polyester-series resin such as a PET. When the anti-Newton-ring film is used in the upper electrode substrate (an electrode substrate which contacts with a pressing member such as a finger or a pen), a plastic sheer or film (a non-stretched or stretched plastic sheer or film) may be used in view of the necessity of flexibility among these supports.

The thickness of the support having a two-dimensional structure may be selected within the range of, for example, about 5 to 2000 $\mu$m, preferably about 15 to 1000 $\mu$m, and more preferably about 20 to 500 $\mu$m.

(Characteristics of anti-Newton-ring film)

Since the anti-Newton-ring film of the present invention has a finely uneven surface structure having minute raised and depressed regions in large quantities, corresponding to the above phase-separation structure, the generation of Newton rings in a touch panel (particularly a resistive touch panel) can effectively be prevented or inhibited. Further, the anti-Newton-ring film has a high transmitted image clarity and allows a dazzle-subdued clear image to be displayed on a display screen of a display apparatus.

Further, as described above, in the phase separation structure, the average distance between domains (two adjacent domains) substantially has regularity or periodicity. Therefore, the light being incident on the anti-Newton-ring film and transmitted through the film shows maximum (local maximum) of the scattered light at a specific angle away from the rectilinear transmitted light by Bragg reflection corresponding to the average distance between phases (or regularity of the uneven surface structure). That is, the anti-Newton-ring film of the present invention isotropically transmits and scatters or diffuses an incident light, while the scattered light (transmitted scattered-light) shows maximum value of the light intensity at a scattering angle which is shifted from the scattering center [for example, at about 0.1 to 10°, preferably about 0.2 to 8°, more preferably about 0.3 to 5° (particularly about 0.5 to 2°)]. The use of the anti-Newton-ring film accordingly inhibits generation of Newton rings and can eliminate dazzle (glare) on a screen image of a display apparatus, differently from a conventional fine-particle-dispersed anti-Newton-ring layer, because the scattered light through the uneven surface structure does not adversely affect the profile of rectilinear transmitted light.

The maximum value of the transmitted scattered light intensity was determined as follows: in the angle distribution profile of the scattered light intensity, even when the angle distribution profile has a separated peak, a shoulder-shaped peak or a flat-shaped peak, it was regarded that the scattered light intensity had a maximum value, and the angle was given as a peak angle.

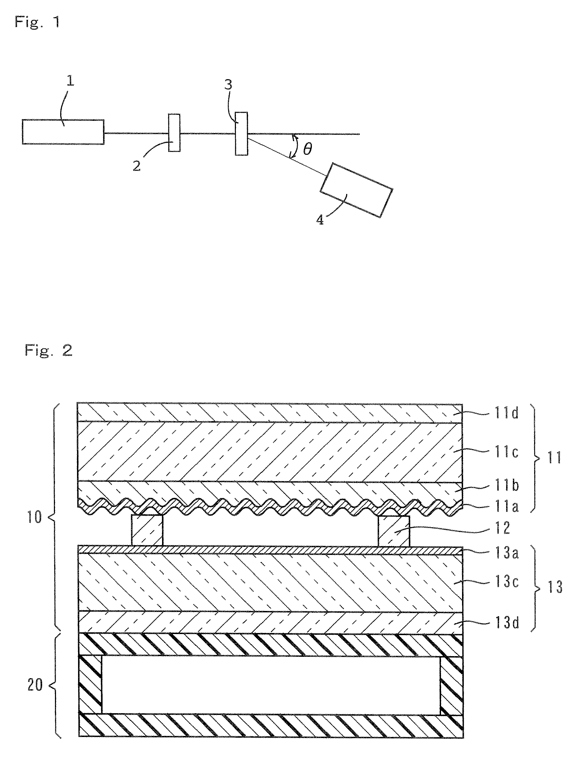

Incidentally, the angle distribution of the light transmitted through the anti-Newton-ring film can be measured by means of a measuring equipment comprising a laser beam source 1 such as He-Ne laser, and a beam receiver 4 set on a goniometer, as shown in Fig. 1. In the embodiment, the relationship between the scattered light intensity and the scattering angle θ is determined by irradiating a sample 3 with a laser beam from the laser beam source 1 through an ND filter 2, and detecting the scattered light from the sample by means of a detector (beam receiver) 4 which is capable of varying an angle at a scattering angle θ relative to a light path of the laser beam and comprises a photomultiplier.

Moreover, dazzle or blur (unclearness) of characters or letters in a display screen of a display apparatus disposed at the bottom of a touch panel can be evaluated by visual observation of a fluorescent tube reflection, and with a gloss meter according to JIS K7105. Further, dazzle and blur of characters can be evaluated by means of a high definition liquid crystal display apparatus having resolution of about 200 ppi, and more simply, can be visually evaluated by means of a high definition CRT display apparatus, or a simple evaluation apparatus comprising a color filter for liquid crystal having resolution of about 150 ppi in combination with a backlight.

The total light transmittance of the anti-Newton-ring film of the present invention is, for example, about 70 to 100%, preferably about 80 to 100%, more preferably about 85 to 100% (e.g., about 85 to 95%), and particularly about 90 to 100% (e.g., about 90 to 99%).

The haze of the anti-Newton-ring film of the present invention may be selected from the range of about 0.1 to 50% and is, for example, about 0.1 to 30%, preferably about 0.5 to 20%, and more preferably about 1 to 10% (particularly about 2 to 8%). According to the present invention, due to such a low haze value, the anti-Newton-ring film provides both an anti-Newton-ring property and a visibility in a display screen of a display apparatus.

The transmitted image clarity of the anti-Newton-ring film of the present invention is, for example, about 50 to 100%, preferably about 60 to 99%, and more preferably about 65 to 90% when an optical slit of 0.5 mm width is used. When the transmitted image clarity is within the above range, the rectilinear transmitted light is less scattered. Thus, even when a touch panel is disposed on a high definition display apparatus, scattering from each picture element is reduced. As a result, dazzle can be prevented.

The transmitted image clarity is a measure for quantifying defocusing or distortion of a light transmitted through a film. The transmitted image clarity is obtained by measuring a transmitted light from a film through a movable optical slit, and calculating amount of light in both a light part and a dark part of the optical slit. That is, when a transmitted light is defocused by a film, the slit image formed on the optical slit becomes thicker, and as a result the amount of light in the transmitting part is not more than 100%. On the other hand, in the non-transmitting part, the amount of light is not less than 0% due to leakage of light. The value C of the transmitted image clarity is defined by the following formula according to the maximum value M of the transmitted light in the transparent part of the optical slit, and the minimum value m of the transmitted light in the opaque part thereof.

$$C(\%) = [(M-m)/(M+m)] \times 100$$

That is, the closer the value C comes to 100%, the lower the image defocusing depending on the anti-Newton-ring film becomes. [reference; Suga and Mitamura. TosouGijutsu, July, 1985].

The solvent to be used in wet spinodal decomposition may be selected depending on the species and solubility of the polymer and the curable resin-precursor, and needs only to be a solvent for uniformly dissolving at least solid content (a plurality of polymers and curable resin-precursor(s), a reaction initiator, other additive(s)). As such a solvent, there may be mentioned, for example, a ketone (e.g., acetone, methyl ethyl ketone, methyl isobutyl ketone, and cyclohexanone), an ether (e.g., dioxane and tetrahydrofuran), an aliphatic hydrocarbon (e.g., hexane), an alicyclic hydrocarbon (e.g., cyclohexane), an aromatic hydrocarbon (e.g., toluene and xylene), a carbon halide (e.g., dichloromethane and dichloroethane), an ester (e.g., methyl acetate, ethyl acetate, and butyl acetate), water, an alcohol (e.g., ethanol, isopropanol, butanol, cyclohexanol, and 1-methoxy-2-propanol), a cellosolve (e.g., methyl cellosolve, ethyl cellosolve, and propylene glycol monomethyl ether), a cellosolve acetate, a sulfoxide (e.g., dimethyl sulfoxide), and an amide (e.g., dimethylformamide and dimethyhlacetamide). Moreover, the solvent may be a mixed solvent.

The anti-Newton-ring film of the present invention can be obtained, with the use of a liquid phase (or a liquid composition) containing the polymer, the curable resin-precursor and the solvent, through a step for forming a phase-separation structure by spinodal decomposition from the liquid phase concurrent with evaporation of the solvent; and a step for curing the curable resin-precursor to form at least an anti-Newton-ring layer. The phase-separation process usually comprises a step for applying (or coating) or casting (flow casting) a liquid mixture containing the polymer, the curable resin-precursor and the solvent (particularly a liquid composition such as a uniform solution) on the support; and a step for evaporating the solvent from the coating layer or casting layer to form a phase-separation structure having a regular or periodical average distance between phases. The precursor can be cured to give an anti-Newton-ring film. In a preferred embodiment, as the liquid mixture, there may be used a composition containing the thermoplastic resin, the photo-curable compound, the photopolymerization initiator, and the solvent for dissolving the thermoplastic resin and the photo-curable compound. The photo-curable component in a phase-separation structure formed by spinodal decomposition is cured with a light irradiation to obtain an anti-Newton-ring layer. In another preferred embodiment, as the liquid mixture, there may be used a composition containing the plurality of polymers incompatible with each other, the photo-curable compound, the photopolymerization initiator, and the solvent. The photo-curable component having a phase-separation structure formed by spinodal decomposition is cured with a light irradiation to obtain an anti-Newton-ring layer.

The concentration of the solute (the polymer, the curable resin-precursor, the reaction initiator, and other additive(s)) in the liquid mixture can be selected within the range causing the phase separation and not deteriorating castability and coatability, and is, for example, about 1 to 80% by weight, preferably about 5 to 60% by weight, and more preferably about 15 to 40% by weight (particularly about 20 to 40% by weight).

Incidentally, when the liquid mixture is applied on a transparent support, the transparent support sometimes dissolves or swells according to the species of solvents. For example, when a coating liquid (uniform solution) containing a plurality of resins is applied on a cellulose triacetate film, the coated surface of the cellulose triacetate film sometimes elutes, corrodes, or swells according to the species of solvents. In this case, the surface to be coated of the transparent support (e.g., a cellulose triacetate film) may be applied with a solvent-resisting coating agent in advance to form an optically isotropic coating layer with solvent resistance. Such a coating layer can be formed with, for example, a thermoplastic resin such as an AS resin, a polyester-series resin, and a poly(vinyl alcohol)-series resin (e.g., a poly(vinyl alcohol), an ethylene-vinyl alcohol copolymer), a curable resin (setting resin) such as an epoxy resin, a silicone-series resin, and an ultraviolet curable resin.

Moreover, when a liquid mixture or coating liquid is applied on a transparent support, a solvent in which the transparent support does not dissolve, corrode or swell may be selected according to the species of the transparent support. For example, when a polyester film is employed as the transparent support, use of a solvent such as tetrahydrofuran, methyl ethyl ketone, isopropanol, 1-butanol, 1-methoxy-2-propanol, or toluene as a solvent of the liquid mixture or coating liquid allows forming of the anti-Newton-ring layer without deteriorating properties of the film.

After the liquid mixture is cast or applied, phase separation by spinodal decomposition can be induced by evaporating or removing the solvent at a temperature of lower than a boiling point of the solvent (e.g., a temperature lower than a boiling point of the solvent by about 1 to 120°C, preferably about 5 to 50°C, in particular about 10 to 50°C). The evaporation or removal of the solvent may usually be carried out by drying, for example drying at an temperature of about 30 to 200°C (e.g. , about 30 to 100°C), preferably about 40 to 120°C, and more preferably about 40 to 80°C according to the boiling point of the solvent.

Such spinodal decomposition accompanied by evaporation of the solvent imparts regularity and periodicity to the average distance between domains of the phase-separation structure. Then, the phase-separation structure formed by spinodal decomposition can immediately be fixed by curing the precursor. The curing of the precursor can be carried out with applying heat, light irradiation, or a combination of these methods depending on the species of curable resin-precursor. The heating temperature may be selected within the appropriate range (e.g., about 50 to 150°C) as far as having the phase-separation structure, or may be selected within the temperature range similar to that in the above-mentioned phase separation process.

Light irradiation can be selected depending on the species of the photo-curable component or the like, and ultraviolet ray, electron beam or the like is usually available for light irradiation. The general-purpose light source for exposure is usually an ultraviolet irradiation equipment. If necessary, light irradiation may be carried out under an inert (or inactive) gas atmosphere.

[Electrode substrate]

The electrode substrate of the present invention is an electrode substrate for a touch panel (particularly a resistive touch panel). The anti-Newton-ring film of the electrode substrate has a first side having the anti-Newton-ring layer and a second side, and a transparent conductive layer is formed on the anti-Newton-ring layer (i.e., on the first side of the anti-Newton-ring film).

The transparent conductive layer comprises a conventional transparent conductive layer available as a transparent electrode, for example, a layer containing a metal oxide [e.g., an indium oxide-tin oxide-series compound oxide (ITO), a fluorine-doped tin oxide (FTO), $InO_2$, $SnO_2$, and ZnO] or a metal (e.g., gold, silver, platinum, and palladium) (in particular, a metal oxide layer such as an ITO membrane). Such a transparent conductive layer can be formed by a conventional method, for example, sputtering, deposition, chemical vapor deposition, and other means (usually sputtering). The transparent conductive layer has a thickness of, for example, about 0.01 to 0.05 $\mu$m, preferably about 0.015 to 0.03 $\mu$m, and more preferably about 0.015 to 0.025 $\mu$m. According to the present invention, the transparent conductive layer can be formed on the uneven surface of the anti-Newton-ring layer to give a uniform and regular uneven structure to the transparent conductive layer, and the uneven structure can inhibit generation of Newton rings caused by the interference of an interface reflection of light between the transparent conductive layer and an air layer (which exists between a pair of transparent conductive layers). Further, since such an uneven structure is formed by phase separation, the uneven structure has gentle and regular roughness. Thus, even when the transparent conductive layer comprises a metal oxide such as an ITO, the electrode substrate has an excellent hitting durability.

According to the species of the touch panel, the transparent conductive layer which is formed on the anti-Newton-ring layer has usually a uniform plane for an analog system and a striped pattern for a digital system. A method for forming the transparent conductive layer having a uniform plane or a striped pattern may include, for example, a method which comprises forming a transparent conductive layer on the whole surface of the anti-Newton-ring layer and then etching the transparent conductive layer to a uniform plane or a striped pattern, and a method which comprises forming a transparent conductive layer having a predetermined pattern on the anti-Newton-ring layer.

The electrode substrate of the present invention may further comprise a hardcoat layer formed on the second side of the anti-Newton-ring film. The hardcoat layer may include a conventional transparent resin layer. As the conventional transparent resin layer, for example, in addition to a hardcoat layer formed with the photo-curable compound exemplified in the paragraph of the curable resin-precursor, there may be utilized an anti-glare hardcoat layer comprising an inorganic or organic fine particle in a transparent resin, and an anti-glare hardcoat layer obtainable by phase separation of a transparent resin in the same manner as in the anti-Newton-ring layer. The thickness of the hardcoat layer may be, for example, about 0.5 to 30 $\mu$m, preferably about 1 to 20 $\mu$m, and more preferably about 2 to 15 $\mu$m.

The electrode substrate of the present invention may further comprise other optical elements [for example, various optical elements to be disposed into a light path, e.g. , a polarizing plate, an optical retardation plate (or a phase plate), and a light guide plate (or light guide)] in combination. That is, the electrode substrate may be disposed or laminated on at least one light path surface of an optical element. For example, the electrode substrate may be laminated on at least one surface of the optical retardation plate, or may be disposed or laminated on an output surface (or emerge surface) of the light guide plate. The electrode substrate comprising the polarizing plate or the optical retardation film in combination is preferably available for an inner touch panel having an antireflective function.

[Touch panel]

The touch panel of the present invention (particularly, a resistive touch panel) comprises the electrode substrate. Fig. 2 is a schematic cross-sectional view showing a touch panel in accordance with an embodiment of the present invention. A touch panel 10 comprises an upper electrode substrate 11 and a lower electrode substrate 13 laminated to the upper electrode substrate 11 through a spacer 12, and a transparent conductive layer 11a of the upper electrode substrate 11 is opposite a transparent conductive layer 13a of the lower electrode substrate 13. The touch panel 10 is disposed on a liquid crystal panel 20.

The upper electrode substrate 11 comprises a transparent substrate 11c comprising a transparent plastic film, a hardcoat layer 11d formed on a first side (a top or upper side of the panel) of the transparent substrate 11c, and an anti-Newton-ring layer 11b formed on a second side (a back or lower side of the panel) of the transparent substrate 11c. The transparent conductive layer 11a is formed on a first side (a back or lower side of the panel) of the anti-Newton-ring layer 11b. Due to a uniform and regular uneven surface structure of the anti-Newton-ring layer 11b, the transparent conductive layer 11a also has an uneven surface structure corresponding to (or conformable to) the uneven structure of the anti-Newton-ring layer 11b. When the upper electrode substrate 11 is touched (or pressed) with a finger or a touching (or pressing) member (such as a pen), the transparent conductive layer 11a is deflected (or bent) to touch the transparent conductive layer 13a of the lower electrode substrate 13 and guide a current, so that a position is detected. According to the present invention, since the transparent conductive layer 11a of the upper electrode substrate 11 has a uniform uneven surface structure corresponding to (or conformable to) the surface structure of the anti-Newton-ring layer 11b the generation of Newton rings due to the interference of an interface reflection of light between the upper electrode substrate 11 and a space (air layer) formed by the spacer 12 can be inhibited even when the upper electrode substrate 11 is touched (or pressed).

The spacer 12 comprises a transparent resin. In order to keep the upper electrode substrate 11 and the lower electrode substrate 13 in a non-contact state when the touch panel is not touched (or pressed), the spacer 12 is formed in a patterned spots or dots on the surfaces of transparent conductive layers 11a and 13a. Such a spacer 12 is usually formed by patterning through masking out of a light irradiation using the photo-curable compound or others exemplified in the paragraph of the curable resin-precursor. The spacer may be not formed. When the spacer is formed, the distance between two adjacent spacers may for example be adjusted to about 0.1 to 20 mm (particularly about 1 to 10 mm). The spacer is not particularly limited to a specific form and may be in a cylindrical form, a quadratic prism form, a spherical form, and others. The height of the spacer is, for example, about 1 to 100 $\mu$m and usually 3 to 50 $\mu$m (particularly about 5 to 20 $\mu$m). The average diameter of the spacer is, for example, about 1 to 100 $\mu$m and usually about 10 to 80 $\mu$m (particularly about 20 to 50 $\mu$m).

The lower electrode substrate 13 is disposed in the underside of the upper electrode substrate 11 through the spacer 12 and comprises a transparent substrate 13c comprising a glass, a transparent conductive layer 13a formed on a first side (a top or upper side of the panel) of the transparent substrate 13c, and a hardcoat layer 13d formed on a second side (a back or lower side of the panel) of the transparent substrate 13c. While the transparent conductive layer 13a of the lower electrode substrate 13 has a flat and smooth surface, an anti-Newton-ring layer may be formed on the transparent conductive layer 13a to form an uneven surface structure in the same as in the upper electrode substrate 11. The anti-Newton-ring effect can be improved by providing both the upper electrode substrate 11 and the lower electrode substrate 13 with the anti-Newton-ring layer. On the other hand, the lower electrode substrate 13 may be provided with the anti-Newton-ring layer without forming an uneven structure on the upper electrode substrate 11. From the viewpoint of the compatibility of the anti-Newton-ring effect and the visibility of the display apparatus disposed in the underside of the touch panel, it is preferable that one electrode substrate (in particular, the upper electrode substrate) be provided with the anti-Newton-ring layer. Since the transparent substrate 13c does not require flexibility differently from the transparent substrate 11c of the upper electrode substrate, the transparent substrate 13c may be a nonflexible substrate (such as a glass substrate) or may be a transparent plastic film having the same flexibility as the transparent substrate 11c.

The touch panel 10 provided with the upper and lower electrode substrates is disposed on the liquid crystal panel 20, which is a liquid crystal display (LCD) apparatus. According to the present invention, the anti-Newton-ring layer 11b can improve a scattered light intensity in a specific angle range while scattering a transmitted light isotropically, thereby not only preventing the generation of Newton rings but also improving the visibility of the liquid crystal panel 20. Specifically, the anti-Newton-ring layer can prevent dazzle (glare) on a display screen of a liquid crystal panel as well as provide an excellent clarity of a transmitted image and prevent blur of characters in a display surface.

Incidentally, the liquid crystal display apparatus may be a reflection-mode (or reflective) liquid crystal display apparatus using an ambient light (or outside light) for illuminating a display unit comprising a liquid crystal cell, or may be a transmission-mode (or transmissive) liquid crystal display apparatus comprising a backlight unit for illuminating a display unit. In the reflection-mode liquid crystal display apparatus, an incident light from the outside is taken through the display unit, the transmitted light is reflected by a reflective member, and the reflected light can illuminate the display unit. In the reflection-mode liquid crystal display apparatus, a touch panel comprising a polarizing plate in combination with the anti-Newton-ring film may be disposed in a light path in front of the reflective member.

In the transmission-mode liquid crystal display apparatus, the backlight unit may comprise a light guide plate (e.g., a light guide plate having a wedgo-shaped cross section) for allowing a light from a light source (e.g., a tubular light source such as a cold cathode tube, a point light source such as a light emitting diode) incident from one side of the light guide plate and for allowing the incident light to emit from the front output surface of the light guide plate. Moreover, if necessary, a prism sheet may be disposed in front of the light guide plate.

The display apparatus to be disposed in the underside of the touch panel is not limited to a liquid crystal display apparatus and may be a plasma display apparatus, an organic or inorganic EL (electroluminescence) display apparatus, and others.

EXAMPLES

The following examples are intended to describe this invention in further detail and should by no means be interpreted as defining the scope of the invention. Anti-Newton-ring films obtained in Examples and Comparative Examples were evaluated by the following items.

[Haze and total light transmittance]

The haze was measured using a haze meter (manufactured by Nippon Denshoku Industries Co. , Ltd., the trade name "NDH-5000W") in accordance with JIS (Japanese Industrial Standards) K7136. The anti-Newton-ring film was disposed so as to face the uneven surface structure of the film toward a beam receiver, and the measurement of the haze was carried out.

[Transmitted image clarity]

The image clarity of the anti-Newton-ring film was measured in accordance with JIS K7105 with an image clarity measuring apparatus (manufactured by Suga Test Instruments Co., Ltd., the trade name "ICM-1T") provided with an optical slit (the slit width = 0.5 mm).

[Transmitted scattered-light intensity]

The angle distribution of the light transmitted through the anti-Newton-ring film was measured using a measuring equipment provided with a He-Ne laser beam source 1 and a beam receiver 4 set on a goniometer (a laser light scattering automatic measuring equipment, manufactured by NEOARK Corporation) as represented by Fig. 1.

[Pencil hardness]

The pencil hardness was measured by applying a load of 500 g in accordance with JIS K5400.

[Anti-Newton-ring property]

$In_2O_3$ (ITO) was sputtered on the anti-Newton-ring layer of the anti-Mewton-ring film to form a transparent conductive layer, and the resulting product was used as an upper electrode substrate. The transparent conductive layer formed by the ITO treatment had a thickness of 0.02 $\mu$m. Further, a glass substrate as a substrate was subjected to the same ITO treatment, thus forming a transparent conductive layer, and the resulting product was used as a lower electrode substrate. A photo-curable acrylic resin (manufactured by Dupont, Riston) was applied to the transparent conductive layer of the lower electrode substrate to form a layer. The resulting layer was patterned and exposed to an ultraviolet ray to form a spacer. The spacer was in a cylindrical form having a height of 9 $\mu$m and a diameter of 30 $\mu$m. The spacer interval (the interval between two adjacent spacers) was 3 mm. The produced upper electrode substrate and lower electrode substrate were so disposed that the transparent electrode layers of the upper and lower electrode substrates were facing each other to give a touch panel. The distance between the upper electrode substrate and the lower electrode substrate corresponds to the height of the spacer. The upper electrode substrate of the touch panel was pressed at a pressure of 26 g/cm with a pen point. The generation state of Newton rings was visually observed and evaluated on the basis of the following criteria.

"A": No Newton rings were generated.
"B": While some Newton rings were generated, the Newton rings were not actually problem.
"C": Newton rings were generated.

[Evaluation of dazzle]

A transparent acryl board having a thickness of 3 mm (manufactured by Sumitomo Chemical Co. , Ltd., SUMIPEX) was placed on a 17-inch LCD monitor (1024 x 1280 pixels; SXGA, resolution: 96 ppi), and the resulting anti-Newton-ring film was disposed thereon. A white image was displayed on the LCD monitor, and the dazzle (glare) on the display surface was visually evaluated on the basis of the following criteria. The used LCD monitor had a clear-type polarizing plate on a surface-layer (or front) side thereof.

"A": No dazzle is recognized.
"B": Dazzle is slightly recognized.
"C": Dazzle is recognized.

[Evaluation of blur of characters]

The resulting anti-Newton-ring film was disposed on a 17-inch LCD monitor (1024 x 1280 pixels: SXGA, resolution: 96 ppi). Black characters were displayed against a white background, and the blur of characters in the display surface was visually evaluated on the basis of the following criteria.

"A": No blur of characters is recognized.
"B": Blur of characters is slightly recognized.
"C": Blur of characters is recognized.

[Hitting durability]

In$_2$O$_3$ (ITO) was sputtered on the anti-Newton-ring layer of the anti-Newton-ring film (size: 100 x 70mm) obtained in Example 1 or Comparative Example 1 to form a transparent conductive layer, and the resulting product was used as an upper electrode substrate. The transparent conductive layer obtained by the ITO treatment had a thickness of 0.02 $\mu$m. Further, a glass substrate as a substrate was subjected to the same ITO treatment, thus forming a transparent conductive layer, and the resulting product was used as a lower electrode substrate. A photo-curable acrylic resin (manufactured by Dupont, Riston) was applied to the transparent conductive layer of the lower electrode substrate to form a layer. The resulting layer was patterned and exposed to an ultraviolet ray to form a spacer. The spacer was in a cylindrical form having a height of 9 $\mu$m and a diameter of 30 $\mu$m. The spacer interval was 3 mm. The produced upper electrode substrate and lower electrode substrate were so disposed that the transparent electrode layers of the upper and lower electrode substrates were facing each other to give a touch panel. For this touch panel, the hitting durability was evaluated using a repeated keying tester (manufactured by Touch Panel Laboratories, Co., Ltd., "Type 201-300-3"). The repeated keying tester comprises a silicone rubber (3 mm$\phi$) as a virtual finger and is a tester for evaluating hitting durability by repeatedly hitting the upper electrode substrate with the virtual finger to come in contact with the lower electrode substrate, and detecting a wave form by the load voltage. The measurement was carried out by the following

conditions.

    Keying (or hitting) load: 250 g
    Keying (or hitting) speed: 10 times/second (Hz)
    Load voltage: 3 V
    Pull-up resistor: 1 kΩ

Example 1

In a mixed solvent containing 39.2 parts by weight of methyl ethyl ketone (MEK) (boiling point: 80°C), 11.4 parts by weight of 1-butanol (BuOH) (boiling point: 113°C), and 3.8 parts by weight of 1-methoxy-2-propanol (MMPG) (boiling point: 119°C) were dissolved 15.8 parts by weight of an acrylic resin having a polymerizable unsaturated group (s) in a side chain thereof [a compound in which 3,4-epoxycyclohexenylmethyl acrylate is added to one or some carboxyl group(s) in a (meth)acrylic acid-(meth)acrylate copolymer; manufactured by Daicel Chemical Industries, Ltd., the trade name "CYCLOMER-P(ACA)Z321M", solid content: 44% by weight, solvent: 1-methoxy-2-propanol (MMPG) (boiling point: 119°C)], 1.7 parts by weight of a cellulose acetate propionate (acetylation degree = 2.5%, propionylation degree = 46%, number-average molecular weight in terms of polystyrene: 75,000; manufactured by Eastman, Ltd., the trade name "CAP-482-20"), 19.6 parts by weight of a hexa-functional acrylic UV-curable monomer (manufactured by DAICEL-CYTEC Company, Ltd., the trade name "DPHA"), 8.4 parts by weight of a tri-functional acrylic UV-curable monomer (manufactured by DAICEL-CYTEC Company, Ltd., the trade name "PETIA"), 0.04 parts by weight of a fluorine-containing UV-curable compound (manufactured by Omnova Solution, the trade name "Polyfox3320"), and 0.3 parts by weight of a photo initiator (manufactured by Ciba Japan K.K., the trade name "IRGACURE 184"). This solution was cast on a PET film (manufactured by Toray Industries, Inc., the trade name "U46", thickness: 125 $\mu$m) with the use of a wire bar #28, and then allowed to stand for 30 seconds in an oven at 50°C for evaporation of the solvent to form an anti-Newton-ring layer having a thickness of about 12 $\mu$m. Thereafter, the coated film was passed through an ultraviolet irradiation equipment (manufactured by Ushio Inc., a high-pressure mercury lamp, dose of ultraviolet ray; 800 mJ/cm$^2$) for ultraviolet curing treatment to form a layer having a hardcoat property and an uneven surface structure.

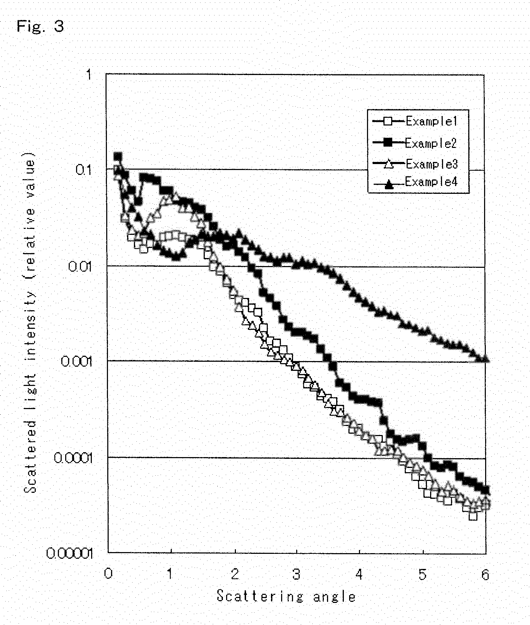

The evaluation results of the obtained anti-Newton-ring film are shown in Table 1. Further, Fig. 3 represents the results of scattering measurements of transmitted light. The figure is a graph plotted with scattering angle ($\theta$ in Fig. 1; that is, 0° means a transmitted straight light (rectilinear transmitted light)) as abscissa against scattered light intensity as ordinate (there is no unit because a relative intensity is measured). As apparent from Fig. 3, the peak of the scattered light was observed in the angle range of 0.7 to 1.7°, which was separated from the rectilinear transmitted light, and the scattered light intensity had a maximum (peak) at 1.3°.

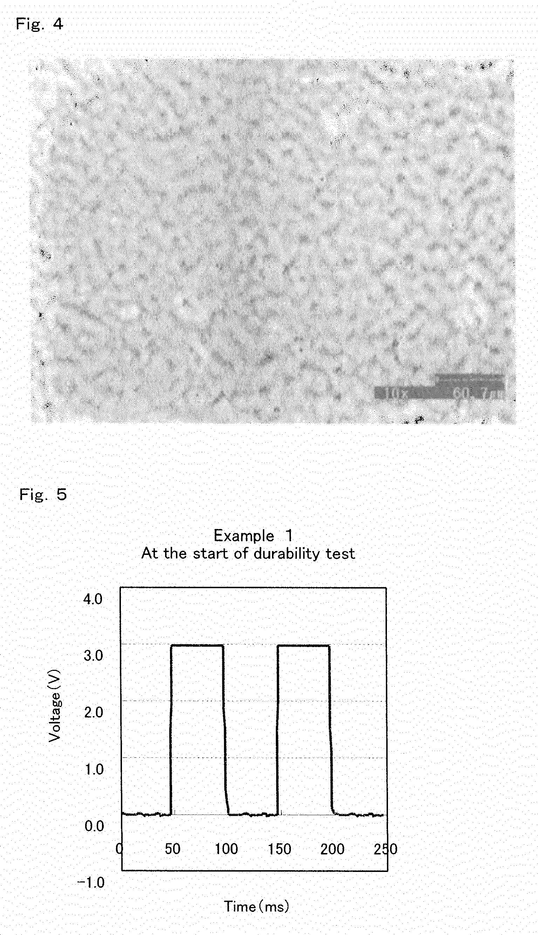

Fig. 4 represents the observation results of the surface of the obtained anti-Newton-ring film by a laser microscope. As observed from Fig. 4, protruded regions are formed as a bicontinuous structure or islands independent from each other, and these structures are uniformly and impartially dispersed in the visual field. The average cycle of the uneven structure probably corresponds to the maximum of the scattered light in Fig. 3.

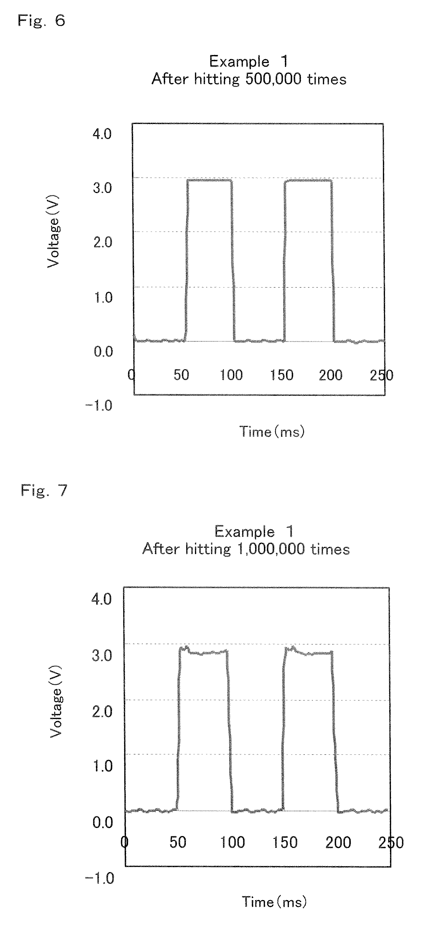

Further, the durability test (n=3) of the obtained anti-Newton-ring film proved that there was only some disturbance of the square wave after hitting one million (1,000,000) times and the transparent electrode sufficiently retained functions thereof. Figs. 5 to 7 represent wave forms (time-voltage) at the start of the durability test, after hitting half-million (500, 00) times and after hitting one million (1,000,000) times, respectively.

Example 2

In a mixed solvent containing 39.1 parts by weight of MEK, 11.0 parts by weight of BuOH, and 4.4 parts by weight of MMPG were dissolved 14.5 parts by weight of an acrylic resin having a polymerizable unsaturated group (s) in a side chain thereof [CYCLOMER-P(ACA)Z321M], 1.5 parts by weight of a cellulose acetate propionate (CAP-482-20), 25.4 parts by weight of a hexa-functional acrylic UV-curable monomer (DPHA), 4.2 parts by weight of a tri-functional acrylic UV-curable monomer (PETIA), 0.12 parts by weight of a fluorine-containing UV-curable compound (Polyfox3320), and 0.3 parts by weight of a photo initiator (IRGACURE 184). This solution was cast on a PET film (U46) with the use of a wire bar #26, and then allowed to stand for 60 seconds in an oven at 65°C for evaporation of the solvent to form an anti-Newton-ring layer having a thickness of about 10 $\mu$m. Thereafter, the coated film was passed through an ultraviolet irradiation equipment for ultraviolet curing treatment to form a layer having a hardcoat property and an uneven surface structure.

The evaluation results of the obtained anti-Newton-ring film are shown in Table 1. Further, Fig. 3 represents the results of scattering measurements of transmitted light. As apparent from Fig. 3, the peak of the scattered light was observed in the angle range of 0.5 to 1.5°, which was separated from the rectilinear transmitted light, and the scattered light intensity had a maximum (peak) at 0.7°.

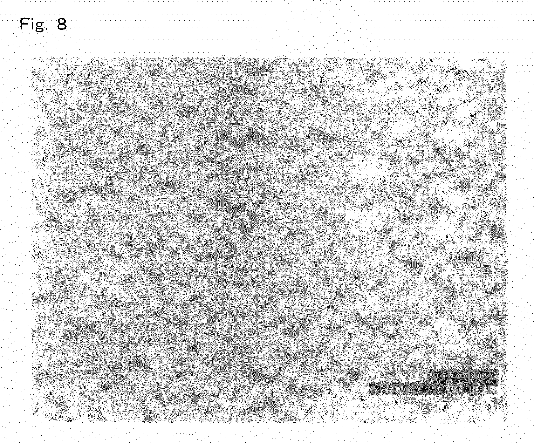

Fig. 8 represents the observation results of the surface of the obtained anti-Newton-ring film by a laser microscope. As observed from Fig. 8, protruded regions are formed as a bicontinuous structure or islands independent from each other, and these structures are uniformly and impartially dispersed in the visual field.

Example 3

In a mixed solvent containing 50.3 parts by weight of MEK, 13.5 parts by weight of BuOH, and 2.3 parts by weight of MMPG were dissolved 15.9 parts by weight of an acrylic resin having a polymerizable unsaturated group (s) in a side chain thereof [CYCLOMER-P(ACA)Z321M], 2.5 parts by weight of a cellulose acetate propionate (CAP-482-20), 15.5 parts by weight of a hexa-functional acrylic UV-curable monomer (DPHA), 0.5 parts by weight of a photo initiator (IRGACURE 184), and 0.5 parts by weight of a photo initiator (manufactured by Ciba Japan K.K., the trade name "IRGACURE 907"). This solution was cast on a PET film (manufactured by Toyobo Co., Ltd., the trade name "A4300", thickness: 188 μm, corona-treated) with the use of a wire bar #24, and then allowed to stand for 60 seconds in an oven at 60°C for evaporation of the solvent to form an anti-Newton-ring layer having a thickness of about 8 μm. Thereafter, the coated film was passed through an ultraviolet irradiation equipment for ultraviolet curing treatment to form a layer having a hardcoat property and an uneven surface structure.

The evaluation results of the obtained anti-Newton-ring film are shown in Table 1. Further, Fig. 3 represents the results of scattering measurements of transmitted light. As apparent from Fig. 3, the peak of the scattered light was observed in the angle range of 0.5 to 1.6°, which was separated from the rectilinear transmitted light, and the scattered light intensity had a maximum (peak) at 1.1°.

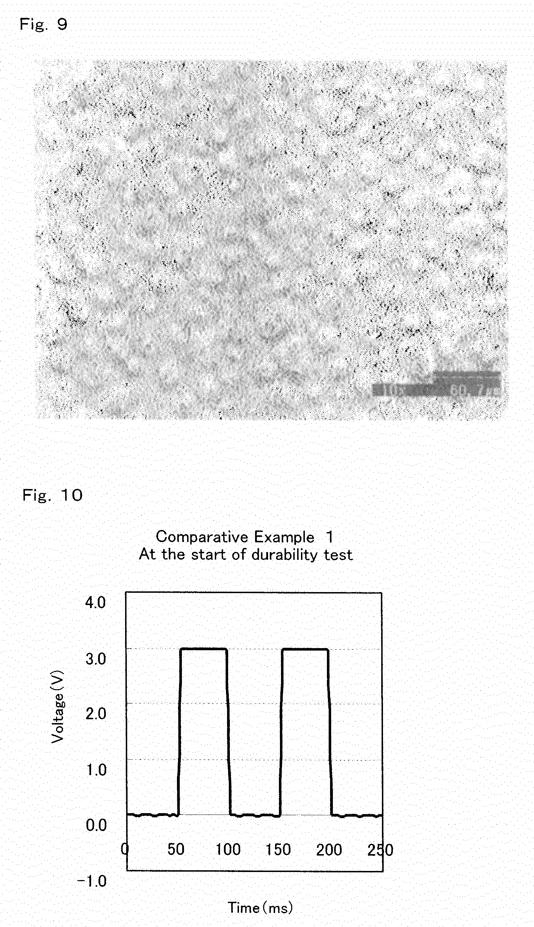

Fig. 9 represents the observation results of the surface of the obtained anti-Newton-ring film by a laser microscope. As observed from Fig. 9, protruded regions are formed as a bicontinuous structure or islands independent from each other, and these structures are uniformly and impartially dispersed in the visual field.

Example 4

In a mixed solvent containing 50.3 parts by weight of MEK, 13.5 parts by weight of BuOH, and 3.6 parts by weight of MMPG were dissolved 13.6 parts by weight of an acrylic resin having a polymerizable unsaturated group (s) in a side chain thereof [CYCLOMER-P(ACA)Z321M], 1.5 parts by weight of a cellulose acetate propionate (CAP-482-20), 17.5 parts by weight of a hexa-functional acrylic UV-curable monomer (DPHA), 0.5 parts by weight of a photo initiator (IRGACURE 184), and 0.5 parts by weight of a photo initiator (IRGACURE 907). This solution was cast on a PET film (A4300) with the use of a wire bar #24, and then allowed to stand for 60 seconds in an oven at 60°C for evaporation of the solvent to form an anti-Newton-ring layer having a thickness of about 8 μm. Thereafter, the coated film was passed through an ultraviolet irradiation equipment for ultraviolet curing treatment to form a layer having a hardcoat property and an uneven surface structure.

The evaluation results of the obtained anti-Newton-ring film are shown in Table 1. Further, Fig. 3 represents the results of scattering measurements of transmitted light. As apparent from Fig. 3, the peak of the scattered light was observed in the angle range of 1.1 to 2.8°, which was separated from the rectilinear transmitted light, and the scattered light intensity had a maximum (peak) at 2.1°.

Example 5

In a mixed solvent containing 70.4 parts by weight of tetrahydrofuran (THF) and 2.0 parts by weight of MMPG were dissolved 13.6 parts by weight of an acrylic resin having a polymerizable unsaturated group (s) in a side chain thereof [CYCLOMER-P(ACA)Z321M], 2.0 parts by weight of a cellulose acetate propionate (CAP-482-20), 12.0 parts by weight of a hexa-functional acrylic UV-curable monomer (DPHA), 0.28 parts by weight of a photo initiator (IRGACURE 184), and 0.28 parts by weight of a photo initiator (IRGACURE 907). This solution was cast on a PET film (A4300) with the use of a wire bar #20, and then allowed to stand for 30 seconds in an oven at 80°C for evaporation of the solvent to form an anti-Newton-ring layer having a thickness of about 6 μm. Thereafter, the coated film was passed through an ultraviolet irradiation equipment for ultraviolet curing treatment to form a layer having a hardcoat property and an uneven surface structure. The evaluation results of the obtained anti-Newton-ring film are shown in Table 1.

Example 6

Butyl acetate (270.0 g) was added to a 1000-ml reactor equipped with a mixing (or stirring) blade, a nitrogen-introducing tube, a cooling tube, and a dropping funnel and heated to 120°C. To the reactor were added dropwise a mixed solution containing 243.9 g of an azo-group-containing polysiloxane compound (manufactured by Wako Pure Chemical Industries, Ltd., the trade name "VPS-1001N", molecular weight of polysiloxane chain: 10,000, solid content: 50%), 144.0 g of cyclohexyl methacrylate, 43.7 g of styrene, 52.3 g of hydroxylethyl methacrylate, and 343.3 g of butyl acetate under a nitrogen atmosphere over 3 hours at a constant speed, and then mixed at 120°C for 30 minutes for reaction. Further, 15.0 g of a butyl acetate solution containing 0.60 g of t-butylperoxy-2-ethyl hexanoate was added dropwise to the reaction mixture over 30 minutes at a constant speed, and then mixed at 120°C for one hour for the reaction to give a silicone acryl block copolymer.

Moreover, 200 g of propylene glycol monomethyl ether was added to another 1000-ml reactor equipped with a mixing (or stirring) blade, a nitrogen-introducing tube, a cooling tube, and a dropping funnel and heated to 110°C. To the reactor were added dropwise a mixture containing 280.8 g of isobornyl methacrylate, 4.2 g of methyl methacrylate, 15.0 g of methacrylic acid, and 340.0 g of propylene glycol monomethyl ether under a nitrogen atmosphere over 3 hours at a constant speed, and then mixed at 110°C for 30 minutes for reaction. Further, 120 g of a propylene glycol monomethyl ether solution containing 3.0 g of t-butylperoxy-2-ethyl hexanoate was added to the reaction mixture over 30 minutes at a constant speed, and then 25.5 g of a propylene glycol monomethyl ether solution containing 0.3 g of t-butylperoxy-2-ethyl hexanoate was further added dropwise thereto over 30 minutes to give an acrylic copolymer.

In a mixed solvent containing 37.5 parts by weight of anisole and 37.5 parts by weight of MEK were dissolved 3.0 parts by weight of the resulting silicone acryl block copolymer, 4.5 parts by weight of the resulting acrylic copolymer, 17.5 parts by weight of a tri-functional acrylic UV-curable monomer (PETIA), 0.25 parts by weight of a photo initiator (IRGACURE 184), and 0.25 parts by weight of a photo initiator (IRGACURE 907) to give a solution. This solution was cast on a PET film (A4300) with the use of a wire bar #24, and then heated for 30 seconds in an oven at 80°C for evaporation of the solvent to form an anti-Newton-ring layer having a thickness of about 8 μm. Thereafter, the coated film was passed through an ultraviolet irradiation equipment for ultraviolet curing treatment to form a layer having a hardcoat property and an uneven surface structure. The evaluation results of the obtained anti-Newton-ring film are shown in Table 1.

Comparative Example 1

In a mixed solvent containing 52.0 parts by weight of MEK and 13.0 parts by weight of MMPG were dissolved 15.4 parts by weight of a hexa-functional acrylic UV-curable monomer (DPHA) and 15.4 parts by weight of a tri-functional acrylic UV-curable monomer (PETIA), and added 4.2 parts by weight of a polystyrene bead (manufactured by Soken Chemical & Engineering Co., Ltd., average particle size: 4 μm). In the resulting liquid coating composition were dissolved 0.2 parts by weight of a photo initiator (IRGACURE 184) and 0.2 parts by weight of a photo initiator (IRGACURE 907). This solution was cast on a PET film (A4300) with the use of a wire bar #24, and then allowed to stand for 30 seconds in an oven at 60°C for evaporation of the solvent to form an anti-Newton-ring layer having a thickness of about 10 μm. Thereafter, the coated film was passed through an ultraviolet irradiation equipment for ultraviolet curing treatment to form a layer having a hardcoat property and an uneven surface structure. The evaluation results of the obtained anti-Newton-ring film are shown in Table 1.

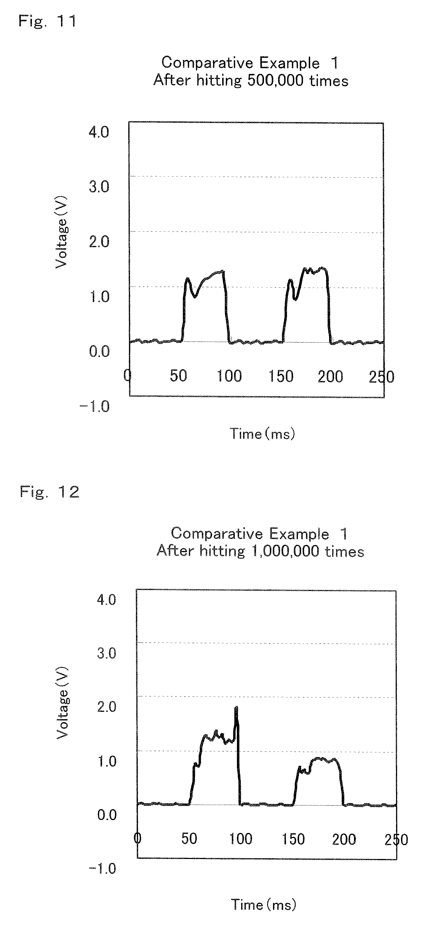

Further, the durability test (n=2) of the obtained anti-Newton-ring film proved that in both films the wave form of the square wave began to decay after hitting around hundred thousand (100,000) times and completely decayed after hitting approximately half-million (500,000) times, and the transparent electrode could not retain functions thereof. Figs. 10 to 12 represent wave forms (time-voltage) at the start of the durability test, after hitting half-million (500,000) times and after hitting one million (1,000,000) times, respectively. From the results, it is presumed that cracks were generated in the transparent conductive layer due to the uneven structure formed with the hard fine particle.

Comparative Example 2

In a mixed solvent containing 52.0 parts by weight of MEK and 13.0 parts by weight of MMPG were dissolved 16.8 parts by weight of a hexa-functional acrylic UV-curable monomer (DPHA) and 16.8 parts by weight of a tri-functional acrylic UV-curable monomer (PETIA), and added 1.4 parts by weight of a polystyrene bead (manufactured by Soken Chemical & Engineering Co., Ltd., average particle size: 4 μm). In the resulting liquid coating composition were dissolved 0.2 parts by weight of a photo initiator (IRGACURE 184) and 0.2 parts by weight of a photo initiator (IRGACURE 907). This solution was cast on a PET film (A4300) with the use of a wire bar #24, and then allowed to stand for 30 seconds in an oven at 60°C for evaporation of the solvent to form an anti-Newton-ring layer having a thickness of about 10 μm. Thereafter, the coated film was passed through an ultraviolet irradiation equipment for ultraviolet curing treatment to form a layer having a hardcoat property and an uneven surface structure. The evaluation results of the obtained anti-Newton-ring film are shown in Table 1.

[Table 1]

Table 1

| | Examples | | | | | | Comparative Examples | |
|---|---|---|---|---|---|---|---|---|
| | 1 | 2 | 3 | 4 | 5 | 6 | 1 | 2 |
| Thickness ($\mu$m) | 12 | 10 | 8 | 8 | 6 | 8 | 10 | 10 |
| Haze (%) | 3.6 | 5.2 | 5.4 | 19.9 | 14.3 | 12.0 | 9.9 | 4.0 |
| Total light transmittance (%) | 91.1 | 91.6 | 91.9 | 91.0 | 90.9 | 91.0 | 90.7 | 90.7 |
| Transmitted image clarity | 78 | 65 | 80 | 76 | 85 | 70 | 45 | 62 |
| Maximum of scattering (°) | 1.3 | 0.7 | 1.1 | 2.1 | 8.0 | 1.5 | not observed | not observed |
| Pencil hardness | 2H | 2H | H | H | H | H | H | H |
| Anti-Newton-ring property | A | A | A | A | A | A | B | C |
| Dazzle | A | A | A | A | A | A | C | B |
| Blur of characters | A | A | A | B | B | B | B | A |

As apparent from the results shown in Table 1, the anti-Newton-ring films of Examples prevent generation of Newton rings and provide an excellent visibility in a display screen. In particular, the films of Examples 1 to 3 have excellent optical characteristics. Among them, the films of Examples 1 and 2 also have a high hardness. In contrast, the anti-Newton-ring films of Comparative Examples cannot provide anti-Newton-ring and visibility.

INDUSTRIAL APPLICABILITY

The anti-Newton-ring film of the present invention is useful for a touch panel (particularly, a resistive touch panel) used in combination with a display apparatus (e,g., a liquid crystal display apparatus, a plasma display apparatus, and an organic or inorganic EL display apparatus) for a display screen of an electrical and electronics or precision instrument (e.g., a personal computer, a television, a mobile phone an amusement apparatus, a mobile device, a clock or a watch, and a calculator).

DESCRIPTION OF REFERENCE NUMERALS

1          Light source for white parallel light

2          ND filter

3          Sample

4          Detector

10          Touch panel

11          Upper electrode substrate

12          Spacer

13          Lower electrode substrate

11a, 13a    Transparent conductive layer

11b          Anti-Newton-ring layer

11c, 13c    Transparent substrate

11d, 13d     Hardcoat layer

20        Liquid crystal panel

**Claims**

1. An anti-Newton-ring film containing an anti-Newton-ring layer which comprises one or more polymers and a cured product of one or more curable resin-precursors and has a phase-separation structure, wherein the anti-Newton-ring layer has an uneven surface structure, isotropically transmits and scatters an incident light, shows a maximum value of a scattered light intensity at a scattering angle of 0.1 to 10°, and has a total light transmittance of 70 to 100%.

2. An anti-Newton-ring film according to claim 1, wherein the anti-Newton-ring layer has a total light transmittance of 80 to 100%, a transmitted image clarity of 60 to 100% measured with an image clarity measuring apparatus provided with an optical slit of 0.5 mm width, and a haze of 1 to 20%.

3. An anti-Newton-ring film according to claim 1 or 2, wherein the anti-Newton-ring layer has a structure phase-separated by spinodal decomposition of (i) a plurality of polymers, (ii) a combination of a polymer and a curable resin-precursor, or (iii) a plurality of curable resin-precursors, from a liquid phase.

4. An anti-Newton-ring film according to any one of claims 1 to 3, wherein the anti-Newton-ring layer comprises a plurality of polymers being phase-separable each other by spinodal decomposition from a liquid phase, and at least one polymer of the plurality of polymers has a functional group participating in a curing reaction of the curable resin-precursor, and the curable resin-precursor is compatible with at least one polymer of the plurality of polymers.

5. An anti-Newton-ring film according to claim 4, wherein the plurality of polymers being phase-separable each other by spinodal decomposition from the liquid phase comprises a cellulose derivative and at least one resin selected from the group consisting of a styrenic resin, a (meth) acrylic resin, an alicyclic olefinic resin, a polycarbonate-series resin, and a polyester-series resin, at least one polymer of the polymers has a polymerizable group, and the curable resin-precursor comprises a polyfunctional monomer having at least two polymerizable unsaturated bonds.

6. An anti-Newton-ring film according to any one of claims 1 to 5, wherein the anti-Newton-ring layer contains the polymer and the curable resin-precursor in a ratio of 5/95 to 60/40 (weight ratio).

7. An anti-Newton-ring film according to any one of claims 1 to 6, which further comprises a transparent support for supporting the anti-Newton-ring layer.

8. An electrode substrate for a resistive touch panel, which comprises an anti-Newton-ring film recited in claim 7 and a transparent conductive layer.

9. An electrode substrate according to claim 8, wherein the anti-Newton-ring layer shows a maximum value of a scattered light intensity at a scattering angle of 0.5 to 2° and has a haze of 1 to 10%.

10. An electrode substrate according to claim 8 or 9, wherein the anti-Newton-ring layer comprises a cellulose derivative, a (meth)acrylic resin having a polymerizable group, a curable compound having three or more (meth)acryloyl groups, and a fluorine-containing curable compound.

11. An electrode substrate according to any one of claims 8 to 10, which is an upper electrode substrate contactable with a finger or a touching member, wherein the transparent support comprises a transparent plastic film.

12. A resistive touch panel provided with an electrode substrate recited in any one of claims 8 to 11.

13. A method for preventing a generation of a Newton ring in a resistive touch panel by using an electrode substrate recited in any one of claims 8 to 11.

Fig. 1

Fig. 2

Fig. 3

Fig. 4

Fig. 5

Example 1
At the start of durability test

Fig. 6

**Example 1**
**After hitting 500,000 times**

Fig. 7

**Example 1**
**After hitting 1,000,000 times**

Fig. 9

Fig. 10

Comparative Example 1
At the start of durability test

Fig. 11

Comparative Example 1
After hitting 500,000 times

Time (ms)

Fig. 12

Comparative Example 1
After hitting 1,000,000 times

Time (ms)

**INTERNATIONAL SEARCH REPORT**

| International application No. |
|---|
| PCT/JP2010/058203 |

A.   CLASSIFICATION OF SUBJECT MATTER
*B32B3/30*(2006.01)i, *B32B7/02*(2006.01)i, *G02B5/02*(2006.01)i, *G06F3/041*
(2006.01)i, *H01H13/712*(2006.01)i

According to International Patent Classification (IPC) or to both national classification and IPC

B.   FIELDS SEARCHED

Minimum documentation searched (classification system followed by classification symbols)
B32B3/30, B32B7/02, G02B5/02, G06F3/041, H01H13/712

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y | JP 2004-306328 A  (Daicel Chemical Industries,<br>Ltd.),<br>04 November 2004 (04.11.2004),<br>paragraphs [0011] to [0017], [0050] to [0055],<br>[0069] to [0071], [0087]<br>& US 2004/0196558 A1    & DE 102004016726 A<br>& KR 10-2004-0086815 A | 1-7<br>8-13 |
| Y | JP 2002-373056 A  (Nippon Paper Industries Co.,<br>Ltd.),<br>26 December 2002 (26.12.2002),<br>paragraphs [0006] to [0015]; fig. 1<br>& US 6937230 B2        & TW 559778 B<br>& KR 10-2002-0072191 A | 8-13 |

| ☒  Further documents are listed in the continuation of Box C. | ☐  See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    29 June, 2010 (29.06.10) | Date of mailing of the international search report<br>    13 July, 2010 (13.07.10) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/058203 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2002-323860 A  (Mitsui Chemicals, Inc.),<br>08 November 2002  (08.11.2002),<br>paragraph [0065]<br>(Family: none) | 8-13 |
| A | JP 2008-275737 A  (Toppan Printing Co., Ltd.),<br>13 November 2008  (13.11.2008),<br>paragraph [0065]<br>(Family: none) | 8-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5054207 A
- JP 5054207 B
- JP 11250764 A
- JP 7169367 A
- JP 8281856 A
- JP 9272183 A
- JP 10323931 A
- JP 2002373056 A